# FASCICULE DE BREVET EUROPEEN

(11) **EP 2 586 014 B1**
(45) Date de publication et mention de la délivrance du brevet: **23.10.2024**
(21) Numéro de dépôt: 11738306.7
(22) Date de dépôt: 22.06.2011
(51) Int. Cl.: G07D 7/207, G07D 7/128, G07D 7/01, G07D 7/00, B42D 25/43, B42D 25/41, G07D 7/12, B42D 25/391, B42D 25/355, B42D 25/364, B42D 25/333, B42D 25/305, B42D 25/29, B41M 3/14

(54) **PROCÉDÉ D 'AUTHENTIFICATION ET/OU D'IDENTIFICATION D'UN ARTICLE DE SÉCURITÉ**
VERFAHREN ZUR AUTHENTIFIZIERUNG UND/ODER IDENTIFIZIERUNG EINES SICHERHEITSARTIKELS
METHOD OF AUTHENTICATING AND/OR IDENTIFYING A SECURITY ARTICLE

(30) Priorité: 22.06.2010 FR 1054932
(43) Date de publication de la demande: 01.05.2013
(73) Titulaire: Oberthur Fiduciaire SAS, 75008 Paris (FR)
(72) Inventeur: ROSSET, Henri, F-38730 Le Pin (FR); DIETEMANN, Philippe, F-38400 Saint-martin-d'heres (FR)
(74) Mandataire: Cabinet Nony
(86) Numéro de dépôt international: PCT/IB2011/052741
(87) Numéro de publication internationale: WO 2011/161635

(56) Documents cités:
- EP-A2- 1 147 912
- WO-A1-2009/062229
- WO-A2-2009/100869
- DE-A1- 102007 037 576
- GB-A- 2 444 966
- US-A- 5 793 502

## Description

La présente invention se rapporte au domaine des articles de sécurité, et notamment des documents de sécurité.

### Arrière-plan

Des procédés reposant sur la persistance rétinienne pour permettre la restitution d'un mouvement sont connus de l'art antérieur. On connaît par exemple le phénakistiscope qui utilise un disque en carton, percé de fentes, sur lequel un mouvement est décomposé en une suite d'images fixes, et un manche permettant son maintien pendant sa rotation. On connaît également le zootrope qui consiste en un tambour percé de fentes sur sa moitié supérieure et abritant à l'intérieur, dans sa partie inférieure, une bande de dessins décomposant un mouvement. Lorsque l'on entraîne en rotation le tambour et que l'on regarde fixement l'intérieur à travers les fentes, les dessins s'animent. On connaît encore le praxinoscope, dont le fonctionnement repose sur le principe du zootrope, qui comporte plusieurs miroirs autour de son axe central afin de visualiser l'illusion de mouvement.

On connaît en outre des procédés de création d'illusions de mouvement décrits dans les documents US 5 901 484, US 6 286 873 et US 2005/0183300. Ces procédés exploitent le principe de décomposition du mouvement permettant la restitution d'un mouvement « à trames ». Un support est porteur de plusieurs images fragmentées, correspondant par exemple à la décomposition d'un objet ou d'un animal en mouvement, et un film transparent porteur d'un réseau de traits parallèles ayant une épaisseur et un espacement entre les traits donnés est placé sur le support. Un mouvement relatif entre les images fragmentées et le réseau de traits parallèles permet de créer l'illusion d'un mouvement.

On connaît également la superposition, par pliage d'un article, de deux éléments. La demande WO 2006/029744 décrit en particulier la superposition, par pliage d'un document, de deux éléments optiques permettant d'obtenir des effets optiques différents selon la distance séparant lesdits éléments optiques. Par ailleurs, la demande WO 02/17242 décrit la superposition, par pliage d'un article, d'un hologramme et d'une information cachée afin de révéler ladite information cachée. Enfin, la demande US 2006-0290136 décrit la superposition, par pliage d'un document, d'une image codée et d'une lentille optique pour décoder ladite image.

On connaît en outre de la demande WO 2005/106808 un procédé d'identification d'un document, par exemple un billet de banque, consistant à superposer une région du document à une image affichée sur un écran, l'image étant issue d'un système de décodage envoyé *via* un réseau.

On connaît encore de la demande WO 2006/018171 un élément de sécurité comportant des caractéristiques d'authentification présentant un premier aspect en lumière transmise et un deuxième aspect, différent du premier, lorsque l'élément de sécurité est placé sur un fond particulier, par exemple un écran à cristaux liquides (LCD).

On connaît également la demande DE 10 2007 037576 A1 qui décrit un billet de banque comportant une fenêtre au moins partiellement transparente dans laquelle figure une première partie d'information cachée, et un écran à cristaux liquides affichant une deuxième partie d'information cachée. La superposition des première et deuxième parties d'information cachée permet de révéler une information reconnaissable. L'écran peut également permettre d'afficher successivement différentes parties d'information cachée qui permettent d'observer successivement différentes informations reconnaissables lorsque le billet de banque est superposé à l'écran.

### Résumé

Il existe un besoin pour renforcer encore la sécurité et les processus d'authentification et/ou d'identification des articles de sécurité, afin notamment d'augmenter la difficulté de contrefaçon de ces articles.

Il existe également un besoin pour fournir un procédé d'authentification et/ou d'identification d'articles de sécurité qui soit simple à mettre en oeuvre pour l'homme de la rue, notamment à l'aide des outils technologiques à sa disposition.

L'invention se propose ainsi selon l'un de ses aspects d'exploiter le principe de la décomposition en mouvement exposé précédemment afin de pouvoir authentifier et/ou identifier les articles de sécurité par la visualisation de mouvements décomposés, provoquant ainsi une illusion de mouvement.

L'invention est définie dans les revendications indépendantes annexées. Des réalisations avantageuses sont définies dans les revendications dépendantes.

L'invention a ainsi pour objet, selon l'un de ses aspects, un procédé d'authentification et/ou d'identification d'un article de sécurité, notamment un document de sécurité, comportant une première image, le procédé comportant les étapes consistant à :
- superposer au moins partiellement la première image de l'article avec une deuxième image produite par un imageur électronique,
- effectuer un mouvement relatif entre les première et deuxième images afin de permettre d'observer une information d'authentification et/ou d'identification de l'article de sécurité lors du mouvement relatif entre les première et deuxième images.

Grâce à l'invention, il est possible de bénéficier d'un procédé permettant l'authentification et/ou l'identification d'un article de sécurité grâce à la restitution d'une information d'authentification et/ou d'identification lors du mouvement relatif des première et deuxième images.

Il est encore possible de conférer un effet ludique et/ou attractif à l'utilisateur de l'article de sécurité par la manière dont une information cachée est révélée, par exemple par un effet de mouvement ou d'animation.

Lors du mouvement relatif entre les première et deuxième images, un effet de mouvement ou d'animation peut être observé, notamment un effet de mouvement ou d'animation d'images imbriquées. En particulier, l'information d'authentification et/ou d'identification peut comporter un effet d'animation obtenu à partir de plusieurs images imbriquées de la première image et/ou de la deuxième image. Ainsi, seul le mouvement relatif entre les première et deuxième images peut permettre d'observer l'animation des différentes images imbriquées. La simple superposition sans mouvement des première et deuxième images l'une sur l'autre peut ne pas permettre d'observer un effet d'animation mais seulement une image statique.

Le mouvement relatif entre les première et deuxième images peut être un mouvement physique entre l'article et l'imageur électronique, c'est-à-dire correspondre à un déplacement réel entre l'article et l'imageur électronique. En variante, le mouvement relatif entre les première et deuxième images peut correspondre au déplacement d'une image par rapport à l'autre, l'article et l'imageur électronique étant notamment fixes l'un par rapport à l'autre.

L'information d'authentification et/ou d'identification peut avantageusement ne pas être accessible, notamment ne pas être visible, par exemple à l'oeil nu ou avec un dispositif quelconque, autrement que lors du mouvement relatif des première et deuxième images. L'authentification et/ou l'identification de l'article de sécurité peut ainsi ne résulter que de l'observation de l'article de sécurité lors du mouvement relatif des première et deuxième images.

L'article de sécurité peut comporter une fenêtre, par exemple une fenêtre au moins partiellement transparente ou translucide, comportant la première image.

Des exemples de réalisation de fenêtres de sécurité dans les articles de sécurité sont par exemple décrits dans les publications GB 1 552 853, qui divulgue la création d'une fenêtre notamment par transparentisation, découpe laser, abrasion ou incision mécanique, EP 0 229 645 qui décrit la création en phase humide d'une fenêtre sur une face ou sur les deux faces d'un papier bijet, WO 2004/096482 qui décrit la création d'une fenêtre par découpe laser, CA 2 471 379 qui décrit la création d'une fenêtre transparente et association avec un élément de sécurité et WO 2008/006983 qui décrit la création d'une fenêtre transparente sur un papier bijet.

La première image peut figurer sur une zone d'opacité réduite de l'article de sécurité. Une telle zone d'opacité réduite peut notamment correspondre à une zone de moindre épaisseur, à une zone rendue transparente ou à une zone comprenant au moins une couche d'un matériau de moindre opacité. L'opacité de ladite zone d'opacité réduite sera en particulier suffisamment faible pour permettre une observation en transmission de la première image. De préférence, l'image est visible en transmission et en réflexion.

La première image peut figurer sur une zone au moins partiellement transparente ou translucide de l'article de sécurité.

Lorsque l'imageur électronique produit la deuxième image au moyen d'une lumière polarisée, la première image figure de préférence sur une zone au moins partiellement transparente ou translucide, notamment une fenêtre au moins partiellement transparente.

La deuxième image produite par l'imageur électronique peut être affichée sur l'imageur électronique, par exemple sur un écran de l'imageur électronique.

En variante, la deuxième image peut être projetée par l'imageur électronique, par exemple sur un fond ou sur l'article de sécurité. En particulier, lorsque la deuxième image est projetée sur un fond, la première image de l'article de sécurité peut être superposée à la deuxième image projetée sur le fond. En variante, la deuxième image peut être projetée au moins partiellement sur la première image de l'article de sécurité.

Le mouvement relatif de la première image par rapport à la deuxième image peut par exemple se faire dans un plan parallèle au plan contenant la deuxième image, ou inversement.

Le mouvement relatif est de préférence une translation, voire une rotation ou une combinaison d'une translation et d'une rotation.

L'article de sécurité peut être plié, une partie de l'article étant fixe par rapport à la deuxième image produite par l'imageur électronique et une autre partie de l'article, notamment une partie comportant la première image, étant animée d'un mouvement de rotation et/ou de translation par rapport à la deuxième image produite par l'imageur électronique.

L'article de sécurité peut être plié et le mouvement relatif peut être un mouvement au cours duquel une partie de l'article est fixe par rapport à l'imageur électronique tandis que l'autre partie de l'article est mobile.

La première image de l'article de sécurité peut être déplacée relativement à la deuxième image produite par l'imageur électronique, cette dernière étant immobile. Par exemple, l'imageur électronique peut afficher ou projeter la deuxième image, celle-ci étant immobile, et l'utilisateur vient superposer la première image de l'article de sécurité sur la deuxième image et déplace la première image par rapport à la deuxième image. Le mouvement relatif entre la première et la deuxième image résulte ainsi d'un déplacement de l'article par rapport à l'imageur.

En variante, le mouvement relatif entre les images s'effectue sans mouvement relatif entre l'article et l'imageur électronique. La deuxième image produite par l'imageur électronique peut être déplacée par modification de l'affichage ou de la projection, relativement à la première image de l'article de sécurité, cette dernière étant immobile. Par exemple, l'imageur électronique peut afficher ou projeter une deuxième image en mouvement, et l'utilisateur vient superposer la première image à la deuxième image sans déplacer la première image par rapport à l'imageur électronique.

En variante encore, l'affichage ou la projection de la deuxième image s'effectue de façon variable dans le temps de façon à générer un mouvement relatif avec la première image et l'article et l'imageur électronique sont en plus animés d'un mouvement relatif l'un par rapport à l'autre.

L'article et l'imageur peuvent venir en contact ou non lorsque les images sont superposées.

On entend par « imageur électronique », un dispositif électronique permettant de produire une image par affichage ou projection.

L'imageur électronique peut par exemple comporter un écran sur lequel la deuxième image est affichée.

L'imageur électronique peut comporter un écran de tout type connu, par exemple un écran d'ordinateur, de téléviseur, de téléphone portable, d'un livre ou agenda électronique, d'un assistant numérique personnel (« Personal Digital Assistant »), d'un cadran de montre, cette liste étant non limitative.

L'imageur électronique peut être un projecteur, dépourvu ou non d'écran sur lequel s'effectue la projection. Le projecteur peut permettre de projeter la deuxième image sur un fond ou sur l'article de sécurité.

L'imageur électronique peut par exemple être un projecteur de tout type connu, par exemple un projecteur de diapositives, un vidéoprojecteur, un rétroprojecteur, un picoprojecteur ou nanoprojecteur, par exemple un vidéoprojecteur miniaturisé intégré dans un appareil portable (PDA, téléphone portable, ordinateur portable, par exemple), un projecteur cinématographique, cette liste étant non limitative.

L'imageur électronique permet de préférence de générer une image pixélisée, dont chaque pixel est adressable individuellement, de préférence avec au moins 256 niveaux de gris ou couleurs, de résolution comprise entre 50 et 1000 dpi (« Dot Per Inch » ou « Points Par Pouce »).

L'imageur électronique peut être un projecteur projetant une lumière visible, infrarouge (IR) et/ou ultra-violette (UV).

La première image peut par exemple être réalisée au moins partiellement à l'aide d'une encre visible et/ou luminescente, par exemple fluorescente et/ou phosphorescente.

L'imageur électronique peut comporter un écran du type LCD (« Liquid Crystal Display »), LED « Light Emitting Diode »), OLED (« Organic Light Emitting Diode »), laser, plasma, électrochrome, FED (« Field Emission Display »), SED (« Surface-conduction Electron-emitter Display »), LCOS (« Liquid Crystal On Silicon ») ou encore un tube cathodique.

L'image électronique comporte de préférence un écran à cristaux liquides (LCD).

L'écran peut présenter une résolution comprise entre 50 et 600 dpi, mieux entre 100 et 300 dpi, par exemple égale à 160 dpi.

La première image et/ou la deuxième image peuvent présenter des propriétés de polarisation.

Par exemple, la deuxième image peut être produite par l'imageur électronique au moyen d'une lumière polarisée, notamment une lumière polarisée rectilignement, circulairement ou elliptiquement. L'imageur électronique peut comporter un écran émettant une lumière polarisée ou projeter une lumière polarisée.

L'article de sécurité peut comporter un filtre polarisant. En particulier, la première image peut être réalisée à l'aide d'un filtre polarisant.

La première image peut être réalisée selon au moins l'une des étapes suivantes :
- réalisation d'une ou plusieurs perforations dans au moins un filtre polarisant pour former la première image,
- chauffage local d'au moins un filtre polarisant, par exemple à l'aide d'un laser, de façon à supprimer localement les propriétés polarisantes du filtre et à former la première image,
- application sélective, par exemple par impression et/ou collage, sur au moins un filtre polarisant, d'un matériau diffusant, par exemple une silice colloïdale et/ou une bande adhésive, pour former la première image,
- réalisation d'au moins une attaque sélective par réaction chimique et/ou par émission de rayonnement lumineux, notamment ultra-violet (UV) et/ou infrarouge (IR) et/ou laser, sur au moins un filtre polarisant, éventuellement à l'aide d'un masque, pour former la première image, de façon notamment à annuler localement l'effet polarisant du filtre,
- application, notamment par impression ou par couchage, d'au moins un effet polarisant, notamment d'un composé polarisant, par exemple à l'aide d'une encre comportant ledit composé polarisant, sur un substrat donné non polarisant, notamment un film polymère, pour former la première image,
- application, notamment par impression ou par couchage, d'au moins une composition comportant des cristaux liquides cholestériques, par exemple telle que celle commercialisée par la société SICPA sous la dénomination Oasis^{®}, sur un substrat donné polarisant, notamment un film polymère, pour former la première image.

A titre de remarque, selon l'effet désiré, les étapes énoncées précédemment seront réalisées de manière à former une image qui est l'image en positif ou en négatif de la première image. En particulier, on peut appliquer localement sur au moins un filtre polarisant, par exemple par impression, un polyuréthane aliphatique base polyéther, par exemple tel que celui commercialisé par la société LAMBERTI sous la dénomination Esacote^{®} PU 21/S.

Dans la dernière possibilité mentionnée ci-dessus, lorsque lors de la mise en oeuvre du procédé selon l'invention, la composition comportant des cristaux liquides cholestériques se situe entre le substrat polarisant et l'imageur électronique, les cristaux liquides cholestériques modifient la lumière polarisée de l'imageur électronique qui n'est pas arrêtée par le substrat et les zones recouvertes de cristaux liquides cholestériques apparaissent transparentes lorsque le substrat polarisant est orienté de façon à être opaque.

En revanche, lorsque le substrat polarisant se situe entre la composition comportant des cristaux liquides cholestériques et l'imageur électronique, les cristaux liquides cholestériques présentent un effet optiquement variable lorsque le substrat polarisant est orienté de façon à être opaque. L'effet optiquement variable des cristaux liquides cholestériques est plus généralement connu sous l'appellation d'effet « colorshift », la couleur des cristaux liquides cholestériques dépendant de l'angle d'observation et ceux-ci étant notamment observés sur un fond sombre, de préférence de couleur noire. L'effet « colorshift » des cristaux liquides cholestériques peut constituer une sécurisation supplémentaire pour authentifier et/ou identifier l'article de sécurité.

Ainsi, dans des exemples de mise en oeuvre particulièrement préférés du procédé selon l'invention, la première image est définie par un premier matériau polarisant superposé à un deuxième matériau polarisant, le premier matériau s'étendant notamment selon des motifs correspondant à la première image et le deuxième matériau s'étendant de façon continue. Le premier matériau est de préférence une impression de cristaux liquides cholestériques et le deuxième matériau est de préférence un substrat linéairement polarisant.

Par « motifs correspondants à la première image », on entend que lesdits motifs peuvent former la première image en négatif ou en positif.

Avantageusement, lorsque les première et deuxième images présentent des propriétés de polarisation, il n'existe qu'une seule orientation de l'une par rapport à l'autre permettant à l'une de masquer partiellement l'autre. Autrement dit, il n'existe qu'une seule orientation de la première image par rapport à la deuxième image permettant de ne pas pouvoir observer la deuxième image au travers des zones polarisantes de la première image, ou inversement. En effet, les première et deuxième images présentant des propriétés de polarisation sont constituées de zones polarisantes et de zones non polarisantes. Lorsqu'elles sont placées devant une source lumineuse émettant une lumière polarisée, il n'existe qu'une seule orientation selon laquelle les zones polarisantes deviennent opaques.

En particulier, il n'existe par exemple qu'une seule orientation de la première image dans le cas où l'article comporte un filtre polarisant par rapport à la deuxième image projetée ou affichée par l'imageur électronique au moyen d'une lumière polarisée, qui permette au filtre polarisant de masquer la lumière polarisée de l'imageur électronique. Le filtre polarisant peut n'apparaître opaque, notamment de couleur noire, que dans cette orientation, de préférence unique, de la première image par rapport à la deuxième image.

La présence d'une unique orientation des première et deuxième images l'une par rapport à l'autre telle que décrite ci-dessus peut par exemple permettre d'authentifier et/ou d'identifier l'article de sécurité selon un premier niveau de sécurité, notamment par la présence ou non d'une telle orientation permettant à une image de masquer l'autre.

Lorsque les première et deuxième images sont disposées selon ladite orientation, un mouvement relatif de l'une par rapport à l'autre peut permettre d'observer l'information d'authentification et/ou d'identification de l'article de sécurité.

Selon une variante de réalisation, la première image peut être imprimée avec un composé, notamment des cristaux liquides, visible uniquement lorsque placé devant un imageur électronique émettant une lumière polarisée, notamment un écran à cristaux liquides. Avantageusement, la première image est transparente sous illumination non polarisée, par exemple sous un éclairage naturel, et est visible uniquement sous illumination polarisée à l'aide de l'imageur électronique, ce qui apporte une sécurisation supplémentaire à l'article de sécurité.

L'imageur électronique, par exemple l'écran de l'imageur électronique, et/ou l'article de sécurité peut comporter un indicateur permettant de renseigner l'utilisateur sur la manière de positionner les première et deuxième images l'une par rapport à l'autre pour obtenir ladite orientation, par exemple un repère visuel.

L'article de sécurité peut comporter un microcircuit intégré, par exemple une puce RFID ou une puce optique (activée par exemple par la lumière issue de l'imageur électronique), apte à communiquer avec l'imageur électronique pour que celui-ci produise, notamment affiche et/ou projette, une information renseignant sur la manière de positionner les première et deuxième images l'une par rapport à l'autre pour obtenir ladite orientation.

L'article de sécurité peut comporter un microcircuit intégré, par exemple une puce RFID ou une puce optique, apte à communiquer avec l'imageur électronique pour que celui-ci produise au moins une deuxième image dont l'association avec la première image peut permettre de mettre en oeuvre le procédé selon l'invention. En particulier, l'imageur électronique peut produire au moins une deuxième image associée à une première image de l'article de sécurité par communication entre l'imageur électronique et le microcircuit intégré.

L'imageur électronique peut encore produire au moins une deuxième image à partir d'une photo et/ou d'une vidéo de l'article de sécurité, notamment de la première image de l'article de sécurité ou d'un identifiant présent sur l'article, par exemple un logo ou un numéro de série. La photo et/ou vidéo peut être réalisée avec l'imageur électronique, un dispositif de capture d'image, par exemple une caméra numérique, connectée à l'imageur électronique par une liaison filaire ou non et/ou être transférée à l'imageur électronique, par exemple depuis un dispositif de stockage de données ou *via* un réseau, tel qu'Internet.

La deuxième image peut être produite uniquement à partir de la photo et/ou vidéo de l'article de sécurité, ou en variante, être produite à partir de la photo et/ou vidéo de l'article de sécurité et d'une information supplémentaire, par exemple une information présente sur l'article de sécurité, sur la photo et/ou vidéo, saisie par l'utilisateur, ou encore reçue d'un réseau, par exemple d'un serveur sécurisé.

L'imageur électronique peut par exemple comporter un programme permettant d'identifier l'article de sécurité, et notamment la première image, et de produire, notamment d'afficher et/ou de projeter, une deuxième image obtenue à partir d'une base de données renseignant sur la deuxième image à utiliser en fonction de l'article de sécurité, notamment de la première image.

L'imageur électronique peut produire plusieurs deuxièmes images et/ou l'article de sécurité peut comporter plusieurs premières images, au moins l'une des deuxièmes images permettant d'observer l'information d'authentification et/ou d'identification lorsque superposée à au moins l'une des premières images selon le procédé de l'invention, ou inversement.

En particulier, il peut ainsi être possible d'authentifier et/ou d'identifier l'article de sécurité avec différents types d'imageurs électroniques.

En variante, un imageur électronique donné peut permettre d'authentifier et/ou d'identifier des articles de sécurité de différents types, comportant notamment des premières images différentes.

Par exemple, les premières images peuvent se différencier par leur taille, leur couleur, leur forme, voire par l'espacement entre les points et/ou lignes de trame ou l'épaisseur des points et/ou lignes de trame, notamment dans le cas où les premières images sont des trames de révélation et/ou des images combinées telles que définies ci-après.

Les deuxièmes images peuvent également se différencier par leur taille, leur couleur, leur forme, voire par l'espacement entre les points et/ou lignes de trames ou l'épaisseur des points et/ou lignes de trames, notamment dans le cas où les deuxièmes images sont des trames de révélation et/ou des images combinées telles que définies ci-après, voire encore par la taille des pixels, l'espacement entre les pixels ou la couleur des pixels, notamment dans le cas où les deuxièmes images sont des trames formées par les pixels d'un écran comme décrit ci-après.

Les imageurs électroniques peuvent par exemple se différencier de par leur marque, leur modèle, leur résolution, leur type, à savoir écran d'ordinateur, de téléviseur ou de téléphone, ou projecteur, par exemple.

La présence de plusieurs premières images et/ou deuxièmes images peut permettre d'authentifier et/ou d'identifier l'article de sécurité indépendamment des différences mentionnées ci-dessus.

La deuxième image produite par l'imageur électronique peut par exemple provenir d'un réseau de communication avec lequel communique l'imageur électronique, par exemple un réseau de téléphonie, Internet ou un réseau interne, l'image étant par exemple téléchargée, et/ou être fournie avec l'imageur électronique, par exemple sur un support de données, par exemple un disque dur, une disquette, une clé USB, un CD et/ou un DVD. L'article de sécurité peut, le cas échéant, comporter un tel support de données. Le support de données peut par exemple être un microcircuit intégré, par exemple une puce RFID ou optique, communiquant avec l'imageur électronique.

L'article de sécurité peut comporter une zone luminescente, par exemple fluorescente et/ou phosphorescente, et l'imageur électronique peut projeter la deuxième image sur l'article de sécurité sous éclairage ultraviolet (UV).

En particulier, la première image peut être une impression luminescente, par exemple réalisée sur un fond opaque noir de l'article de sécurité, sur laquelle est projetée la deuxième image sous éclairage UV. La première image n'est alors visible que sous éclairage UV.

La première image peut encore être imprimée sur un fond luminescent de l'article de sécurité, de sorte qu'elle soit visible à la fois sous éclairage UV et éclairage normal.

La première image peut être dissimulée dans un motif de l'article de sécurité. Elle peut également être intégrée à un motif de l'article de sécurité ou encore constituer au moins une partie d'un motif de l'article de sécurité. A titre d'exemple, la première image constitue une partie des cheveux d'un personnage représenté sur un billet de banque.

La première image peut comporter une trame de révélation et la deuxième image peut comporter une image combinée comportant au moins deux images imbriquées, l'image combinée étant associée à la trame de révélation, ou inversement.

Par « associée », il faut comprendre que la trame de révélation est avantageusement adaptée à permettre de visualiser les différentes images imbriquées de l'image combinée.

L'homme du métier adaptera en particulier la résolution de l'imageur électronique et/ou la deuxième image, et la première image de façon à permettre la visualisation des différentes images imbriquées de l'image combinée.

De même que précédemment, la présence de plusieurs premières images peut permettre d'authentifier et/ou d'identifier l'article de sécurité indépendamment de l'imageur électronique utilisé et en particulier indépendamment de sa résolution.

La superposition au moins partielle des première et deuxième images peut permettre d'observer successivement les images imbriquées de l'image combinée par un mouvement relatif de la trame de révélation par rapport à l'image combinée. Il est alors possible d'authentifier et/ou d'identifier l'article de sécurité grâce à la restitution des images imbriquées qui constitue au moins en partie une information d'authentification et/ou d'identification de l'article.

La restitution des images imbriquées peut par exemple provoquer l'illusion d'un mouvement, notamment une animation.

L'imageur électronique peut comporter un écran, par exemple tels que ceux décrits précédemment, dont les pixels servent au moins partiellement à former une deuxième image sous la forme d'une trame de révélation. La première image comporte avantageusement une image combinée associée à la trame de révélation ainsi formée au moins partiellement par les pixels de l'écran.

En particulier, les lignes et/ou points de trame de la trame de révélation peuvent être formés par les pixels de l'écran de l'imageur électronique.

L'écran peut comporter des pixels formant au moins deux trames de révélation de résolutions différentes. En particulier, l'écran peut comporter deux trames de révélation avec des espacements entre points et/ou lignes de trame différents et/ou des épaisseurs de points et/ou de lignes de trame différentes.

La trame de révélation peut être formée par une succession de lignes multichrome formées par des pixels de l'écran, notamment des lignes comportant des pixels présentant trois cellules rouge, verte et bleue (du type RVB), les pixels étant espacés les uns des autres de manière à former des lignes monochromes dépourvues de pixels, notamment de couleur noire. Les pixels peuvent également présenter quatre cellules rouge, verte, bleue et jaune.

De la sorte, les pixels de l'écran peuvent permettre de former une trame de révélation intrinsèque de l'écran sans nécessiter l'affichage d'une image particulière sur l'écran. Par exemple, l'écran est illuminé de façon uniforme en blanc, par allumage des cellules rouges, vertes et bleues de tous les pixels de l'image.

L'imageur peut être utilisé de deux façons. Dans un premier cas, on affiche une image correspondant à un allumage non homogène des pixels de l'imageur. Dans un second cas, on allume de façon homogène tous les pixels de l'imageur et l'on exploite la trame native résultant de l'agencement des cellules des pixels au sein de l'imageur.

Ainsi, l'observation des images imbriquées par mouvement relatif de la première image sous forme d'image combinée par rapport à la deuxième image sous forme de trame de révélation peut permettre d'observer une animation monochrome des images imbriquées selon un premier mouvement des première et deuxième images l'une par rapport à l'autre, et une animation multichrome des images imbriquées selon un deuxième mouvement des première et deuxième images l'une par rapport à l'autre. Le deuxième mouvement a lieu dans une direction différente du premier, de préférence perpendiculaire.

L'image combinée, et les images imbriquées qu'elle comporte, peuvent être des images tramées, c'est-à-dire des images dont les différents niveaux de gradation sont obtenus par des points et/ou lignes de trame. Les images tramées peuvent par exemple être des images en demi-tons, permettant de rendre notamment des niveaux de couleur, par exemple de gris, à partir de regroupements de points de trame.

L'image combinée peut correspondre à la décomposition d'un mouvement d'un motif, par exemple d'un texte, de signes alphanumériques, d'idéogrammes, d'un objet, d'une personne et/ou d'un animal. Les images imbriquées peuvent représenter des positions successives et/ou mouvements successifs d'un motif, par exemple d'un objet, d'une personne et/ou d'un animal.

L'image combinée peut avantageusement être obtenue par la superposition des images imbriquées représentant chacune une position du motif.

Les images imbriquées peuvent représenter des informations cachées et révélées successivement par mouvement relatif, en particulier par translation, de la trame de révélation sur l'image combinée.

De préférence, l'image combinée conserve une esthétique reconnaissable, notamment de manière à constituer un premier élément d'authentification.

La trame de révélation peut permettre à l'oeil humain de visualiser une image imbriquée différente à la fois, le cerveau de l'observateur pouvant reconstituer par exemple un mouvement ou observer une information cachée.

Il faut donner aux expressions « image tramée » et « trame de révélation », au sens de la présente invention, un sens large qui couvre tous les types de trames ou pseudo-trames, comportant une juxtaposition de zones contrastant entre elles, par exemple de zones claires et de zones sombres, distinguables les unes des autres, la forme de ces zones claires et de ces zones sombres n'étant pas limitée à une forme particulière.

Par exemple, l'image combinée et/ou la trame de révélation peuvent comporter un ensemble de points et/ou de lignes parallèles ou non, dont la taille et/ou l'espacement entre eux sont variables ou constants, cet ensemble formant une succession de zones claires et sombres, par exemple blanches et noires.

En particulier, lorsque l'image combinée et/ou la trame de révélation comportent un ensemble de points disposés par exemple selon des lignes et/ou des colonnes, l'observation des images imbriquées peut se faire par translation dans au moins deux directions. Il s'agit notamment d'une direction parallèle auxdites lignes et d'une direction parallèle auxdites colonnes.

L'image combinée et/ou la trame de révélation peuvent notamment comporter un ensemble de lignes, de préférence parallèles entre elles, d'épaisseur et d'espacement entre elles définis. En particulier, les lignes peuvent avoir la même épaisseur et/ou le même espacement entre elles.

L'image combinée et/ou la trame de révélation peuvent par exemple comporter une succession de lignes sombres et claires, par exemple noires et blanches. L'épaisseur des lignes sombres des images combinées est par exemple égale à l'épaisseur des lignes claires du moyen de révélation. L'épaisseur des lignes claires des images imbriquées est par exemple égale à l'épaisseur des lignes sombres du moyen de révélation.

La trame de révélation peut comporter des bandes opacifiantes à bords parallèles, éventuellement non rectilignes. La présence de bandes opacifiantes à bords non rectilignes peut rendre plus difficile la reproduction par un contrefacteur.

La trame de révélation peut comporter des portions de bandes, de couleur sensiblement identique ou identique à celle des bandes de l'image combinée, et disposées de manière à masquer certaines bandes de l'image combinée pour obtenir l'effet désiré.

De préférence, l'aire, notamment la longueur et/ou la largeur et/ou la plus grande dimension, de la trame de révélation peut être supérieure ou égale à l'aire, notamment la longueur et/ou la largeur et/ou la plus grande dimension, de l'image combinée. De la sorte, il est possible de visualiser la reconstitution entière du mouvement produit par le déplacement relatif entre l'image combinée et la trame de révélation.

La trame de révélation peut avoir une forme quelconque, par exemple circulaire, ovale, en étoile, polygonale, par exemple rectangulaire, carrée, hexagonale, pentagonale, en losange, entre autres.

L'article de sécurité peut comporter une première partie d'une trame de révélation ou d'une image combinée, l'imageur électronique comportant l'autre partie. L'article de sécurité et l'imageur optique peuvent alors être placés de sorte à réunir les deux parties de la trame de révélation ou de l'image combinée séparées pour la mise en oeuvre du procédé selon l'invention.

Selon une variante de l'invention, on peut associer deux images combinées de dimensions différentes. L'image combinée de plus petite dimension est en particulier répétée, notamment selon un réseau, notamment de lignes et de colonnes, afin d'apparaître comme un fond sur lequel est disposée l'image combinée de plus grande dimension. La trame de révélation associée comporte alors une première trame de révélation adaptée à l'image combinée de plus grande dimension, et une seconde trame de révélation adaptée à l'image combinée de plus petite dimension. Les deux images combinées différentes peuvent présenter des similarités et/ou se compléter. Elles peuvent en particulier être identiques et/ou symétriques.

La première image peut être portée sur l'article de sécurité par un procédé d'impression, par exemple offset, taille douce, laser, héliogravure, typographie ou sérigraphie.

Par exemple, la première image peut être imprimée, par exemple par des encres colorées ou non, visibles à l'oeil nu, sous lumière ultraviolette (UV) et/ou infrarouge (IR), opaques ou luminescentes, notamment fluorescentes, thermochromes, photochromes, à effet interférentiel, notamment iridescentes, ou à effet optiquement variable selon l'angle d'observation (goniochromatiques), notamment comportant des cristaux liquides, des encres métalliques ou non, magnétiques ou non, entre autres.

La première image peut encore comporter des métallisations et/ou démétallisations, par exemple en aluminium. Avantageusement, des métallisations et/ou des démétallisations peuvent être utilisées afin d'éviter la contrefaçon par impression. En particulier, des métallisations et/ou démétallisations de couleurs différentes sont préférentiellement utilisées, par exemple au moyen d'aluminium et de cuivre.

La première image peut comporter un filigrane ou pseudo-filigrane.

Les filigranes sont produits par des techniques bien connues dans le domaine papetier. Les pseudo-filigranes reproduisent l'apparence d'un filigrane en présentant des différences d'opacité, ils peuvent être obtenus mécaniquement par apport de pression avec ou sans apport de chaleur et/ou chimiquement par application d'une composition, par exemple en augmentant localement la transparence du papier grâce à des substances transparentisantes. La densité de matière fibreuse du pseudo-filigrane peut être uniforme à la différence d'un filigrane conventionnel.

Les première et deuxième images peuvent être colorées, et notamment de couleurs différentes.

La première image peut être portée par un patch et/ou un foil figurant sur l'article de sécurité.

Le patch et/ou le foil peuvent comporter des métallisations et/ou des démétallisations, par exemple en aluminium, ou tout type d'impression.

Le patch et/ou le foil peuvent comporter des impressions holographiques et/ou des cristaux liquides.

La première image peut encore être portée par un fil de sécurité, incorporé en surface, en masse ou en fenêtre(s) dans l'article de sécurité.

Le fil de sécurité peut présenter une largeur suffisante pour permettre d'y faire figurer la première image en totalité. La largeur du fil de sécurité est par exemple comprise entre 3 et 20 mm, et de préférence encore entre 4 et 10 mm.

La première image figure avantageusement sur une zone de l'article au moins partiellement transparente. La première image peut être au moins partiellement transparente.

La zone au moins partiellement transparente peut correspondre à un évidement, traversant ou non, de l'article où se trouve la première image.

La zone est par exemple constituée par un papier calque translucide.

La zone peut encore comporter ou être constituée par une couche polymère comportant par exemple du polyéthylène (PE), du polychlorure de vinyle (PVC), du polyéthylène téréphtalate (PET), du polycarbonate (PC), du polyester carbonate (PEC), du polyéthylène téréphtalate glycol (PETG), de l'acrylonitrile butadiène styrène (ABS) ou un film collecteur de lumière, par exemple du type « guide d'ondes », par exemple un film luminescent à base de polycarbonate commercialisé par la société BAYER sous la dénomination LISA^{®}. Lors de l'utilisation d'un film guide d'onde, la première image est obtenue de préférence par gravure laser.

La zone peut également être rendue transparente par application d'une composition généralement grasse qui rend transparent la zone de façon permanente, comme par exemple une composition faite d'huile et de matériau minéral transparent comme décrit dans le brevet US 2 021 141, ou comme par exemple une composition sous forme d'une cire combinée à un solvant comme décrit dans le brevet US 1 479 437.

On peut aussi rendre transparent la zone en appliquant localement une cire par transfert à chaud, comme décrit dans le brevet US 5 118 526.

On peut encore utiliser pour la zone une couche fibreuse comportant une matière thermofusible, par exemple du polyéthylène comme décrit dans le brevet EP 0 203 499, qui sous l'action locale de la chaleur verra sa transparence varier.

L'article de sécurité, ainsi que les éléments qu'il comporte, comme par exemple la première image, une fenêtre, un fil de sécurité, un patch et/ou un foil comportant ou non la première image, peuvent comporter un ou plusieurs éléments de sécurité additionnels tels que définis ci-après.

Parmi les éléments de sécurité additionnels, certains sont détectables à l'oeil, en lumière du jour ou en lumière artificielle, sans utilisation d'un appareil particulier. Ces éléments de sécurité comportent par exemple des fibres ou planchettes colorées, des fils imprimés ou métallisés totalement ou partiellement. Ces éléments de sécurité sont dits de premier niveau.

D'autres types d'éléments de sécurité additionnels sont détectables seulement à l'aide d'un appareil relativement simple, tel qu'une lampe émettant dans l'ultra-violet (UV) ou l'infra-rouge (IR). Ces éléments de sécurité comportent par exemple des fibres, des planchettes, des bandes, des fils ou des particules. Ces éléments de sécurité peuvent être visibles à l'oeil nu ou non, étant par exemple luminescents sous un éclairage d'une lampe de Wood émettant à une longueur d'onde de 365 nm. Ces éléments de sécurité sont dits de deuxième niveau.

D'autres types d'éléments de sécurité additionnels nécessitent pour leur détection un appareil de détection plus sophistiqué. Ces éléments de sécurité sont par exemple capables de générer un signal spécifique lorsqu'ils sont soumis, de manière simultanée ou non, à une ou plusieurs sources d'excitation extérieure. La détection automatique du signal permet d'authentifier, le cas échéant, l'article. Ces éléments de sécurité comportent par exemple des traceurs se présentant sous la forme de matières actives, de particules ou de fibres, capables de générer un signal spécifique lorsque ces traceurs sont soumis à une excitation optronique, électrique, magnétique ou électromagnétique. Ces éléments de sécurité sont dits de troisième niveau.

L'article de sécurité et les éléments qu'il comporte, peuvent présenter des caractéristiques de sécurité de premier, de deuxième ou de troisième niveau.

En particulier, la première image peut être associée à des effets de métallisation, de luminescence, par exemple fluorescence et/ou phosphorescence, thermochromiques (encre thermochromique par exemple), magnétiques, polarisant (encre à cristaux liquides par exemple), cette liste étant non limitative.

L'article de sécurité peut être un moyen de paiement, tel qu'un billet de banque, un chèque ou un ticket restaurant, un article d'identité tel qu'une carte d'identité, un visa, un passeport ou un permis de conduire, un ticket de loterie, un titre de transport ou un ticket d'entrée à des manifestations culturelles ou sportives, ou encore une carte d'accès, par exemple pour des zones dont l'accès est restreint.

En particulier, l'article de sécurité peut être une carte d'accès comportant une première image, par exemple sous forme d'image combinée, que le porteur de la carte présente à un point de contrôle d'accès, par exemple d'une entreprise, où le procédé selon l'invention est mis en oeuvre, par exemple à l'aide d'une deuxième image sous forme de trame de révélation, pour autoriser l'accès.

L'invention a encore pour objet, selon un autre de ses aspects, un article de sécurité, notamment un document de sécurité, pour la mise en oeuvre du procédé tel que défini précédemment.

L'invention a encore pour objet, selon un autre de ses aspects, un procédé d'authentification et/ou d'identification d'un article de sécurité, notamment un document de sécurité, comportant une première image et un microcircuit intégré, notamment une puce RFID ou une puce optique, le procédé comportant les étapes consistant à :
- superposer au moins partiellement la première image de l'article avec une deuxième image produite par un imageur électronique suite à une communication entre le microcircuit intégré et l'imageur électronique,
- observer une information d'authentification et/ou d'identification de l'article de sécurité, notamment par mouvement relatif entre les première et deuxième images et/ou par changement de l'angle d'observation des première et deuxième images au moins partiellement superposées.

L'invention a encore pour objet, selon un autre de ses aspects, un procédé d'authentification et/ou d'identification d'un article de sécurité, notamment un document de sécurité, comportant une première image, le procédé comportant les étapes consistant à :
- superposer au moins partiellement la première image de l'article avec une deuxième image produite par un imageur électronique à partir d'une photo et/ou vidéo de l'article de sécurité, notamment de la première image,
- observer une information d'authentification et/ou d'identification de l'article de sécurité, notamment par mouvement relatif entre les première et deuxième images et/ou par changement de l'angle d'observation des première et deuxième images au moins partiellement superposées.

La photo et/ou vidéo peut être réalisée avec l'imageur électronique, un dispositif de capture d'image, par exemple une caméra numérique, connectée à l'imageur électronique et/ou être transférée à l'imageur électronique, par exemple depuis un dispositif de stockage de données ou *via* un réseau, tel qu'Internet.

L'invention a encore pour objet, selon un autre de ses aspects, un article de sécurité comportant une première image superposable à au moins une deuxième image produite par un imageur électronique, la première image étant notamment définie par un premier matériau polarisant.

Le premier matériau polarisant peut être superposé à un deuxième matériau polarisant, le premier matériau étant de préférence une impression de cristaux liquides cholestériques et le deuxième matériau étant de préférence un substrat linéairement polarisant.

La première image peut être définie par un substrat polarisant rendu localement non polarisé de manière à former la première image.

La première image peut être définie par une impression d'une encre polarisante.

L'article peut comporter plusieurs premières images différentes, chaque première image étant superposable à au moins une deuxième image produite par un imageur électronique adapté à cette première image, les imageurs électroniques ayant notamment des résolutions différentes.

L'invention a encore pour objet, selon un autre de ses aspects, un article de sécurité comportant plusieurs premières images différentes, chaque première image étant superposable à au moins une deuxième image produite par un imageur électronique adapté à cette première image, les imageurs électroniques ayant notamment des résolutions différentes.

L'article de sécurité peut être utilisé dans le procédé tel que décrit précédemment. Les caractéristiques décrites en relation avec le procédé selon l'invention peuvent s'appliquer à l'article de sécurité.

L'invention a encore pour objet, selon un autre de ses aspects, un procédé de fabrication d'une première image d'un article tel que défini précédemment, dans lequel :
- on dépose une couche métallique sur un substrat au moins partiellement transparent,
- on applique, notamment par impression, couchage ou dépôt, une encre ou un vernis sur la couche métallique, cette encre ou ce vernis pouvant être coloré(e) ou mat(e), de sorte à former la première image,
- on procède à une démétallisation sélective dans la ou les zones non recouvertes par l'encre ou le vernis.

Le choix de l'encre ou du vernis peut être fait de sorte à être compatible avec un procédé de démétallisation.

Le procédé de démétallisation peut par exemple correspondre à un procédé chimique à la soude permettant d'enlever la ou les zones où le métal est non recouvert par l'encre ou le vernis.

Le procédé de démétallisation peut encore comporter l'application d'un vernis ou encre, pouvant être mat(e) ou coloré(e), ayant des propriétés optiques différentes de celles de la couche métallique.

L'encre peut être choisie parmi des encres colorées ou non, visibles à l'oeil nu, sous lumière UV et/ou IR, opaques ou luminescentes, notamment fluorescentes, thermochromes, photochromes, à effet interférentiel, notamment iridescentes, ou à effet optiquement variable selon l'angle d'observation (goniochromatiques), notamment comportant des cristaux liquides, des encres métalliques ou non, magnétiques ou non, entre autres. De préférence, l'encre est fluorescente et/ou phosphorescente sous lumière UV et/ou IR.

L'article peut comporter des éléments de sécurité de premier niveau et/ou de deuxième niveau, tels que décrits précédemment. En particulier, l'article peut comporter des éléments de sécurité sous forme d'impressions et/ou de marqueurs, notamment thermochromes et/ou photochromes.

Grâce au procédé de fabrication selon l'invention, on peut observer sur une première face de l'article une première image métallique brillante et sur la deuxième face opposée de l'article une première image ayant l'aspect de l'encre ou du vernis, par exemple colorée ou mate.

L'invention pourra être mieux comprise à la lecture qui va suivre, de la description d'exemples non limitatifs de mise en oeuvre de celle-ci et à l'examen des figures du dessin, schématiques et partielles, sur lequel :
- la figure 1 représente un schéma en blocs d'étapes mises en oeuvre dans un exemple de procédé selon l'invention,
- les figures 2 à 4 représentent des exemples d'associations d'articles de sécurité et d'imageurs électroniques pour la mise en oeuvre d'un exemple du procédé selon l'invention,
- la figure 5 représente un exemple d'imageur électronique affichant des indicateurs,
- la figure 6 représente un exemple d'article de sécurité comportant un élément de sécurité et un microcircuit intégré,
- la figure 7 représente une série d'images imbriquées permettant de créer une image combinée,
- la figure 8 représente une image combinée obtenue à partir de la série d'images imbriquées de la figure 7,
- la figure 9 représente un exemple de trame de révélation pouvant être associé à l'image combinée de la figure 8,
- les figures 10 à 14 représentent des exemples de réalisation d'articles de sécurité comportant une première image sous la forme d'une image combinée ou d'une trame de révélation,
- la figure 15 représente un exemple de première image ou deuxième image comportant deux images combinées différentes pour la mise en oeuvre d'un exemple du procédé selon l'invention,
- la figure 16 représente un exemple de première image ou deuxième image comportant une trame de révélation pour la mise en oeuvre d'un exemple du procédé selon l'invention, associée aux images combinées de la figure 15,
- les figures 17 et 18 représentent respectivement des exemples de première image et de deuxième image, comprenant chacune à la fois une trame de révélation et une image combinée,
- les figures 19 à 21 illustrent un exemple de mise en oeuvre du procédé selon l'invention, l'article de sécurité comportant une première image sous forme de trame de révélation et l'imageur électronique produisant une deuxième image sous forme d'image combinée,
- les figures 22 et 23 illustrent un autre exemple de mise en oeuvre du procédé selon l'invention, l'article de sécurité comportant une première image sous forme d'image combinée et l'imageur électronique produisant une deuxième image sous forme de trame de révélation,
- les figures 24 à 26 illustrent un autre exemple de mise en oeuvre du procédé selon l'invention, et
- les figures 27 à 31 illustrent d'autres exemples de mise en oeuvre du procédé selon l'invention.

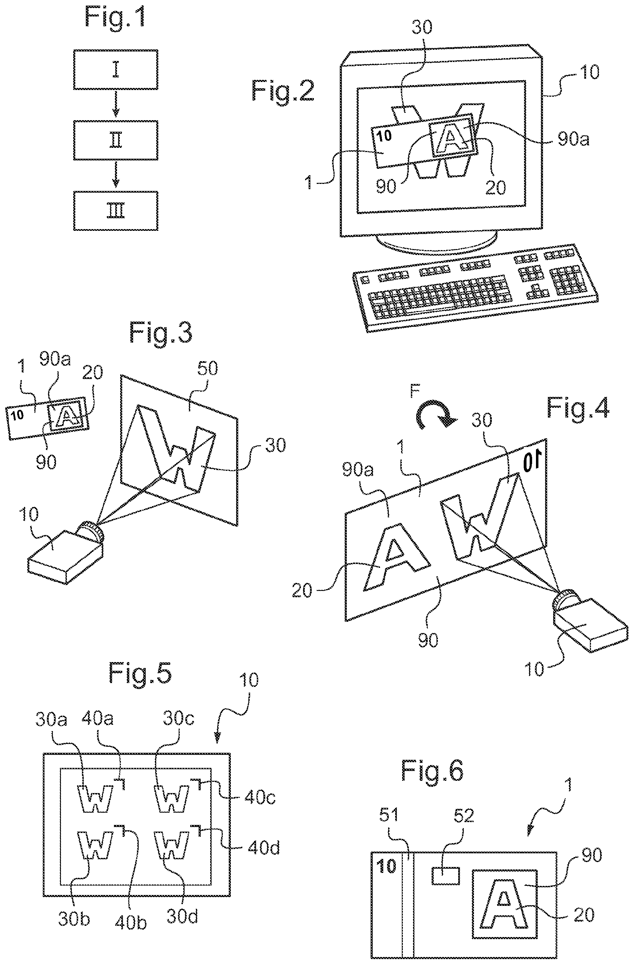

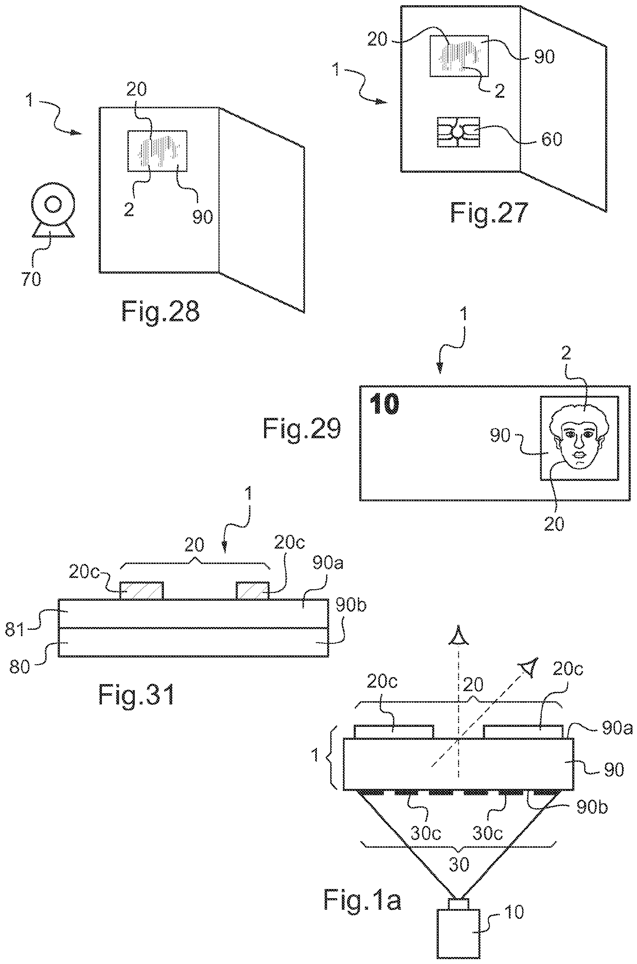

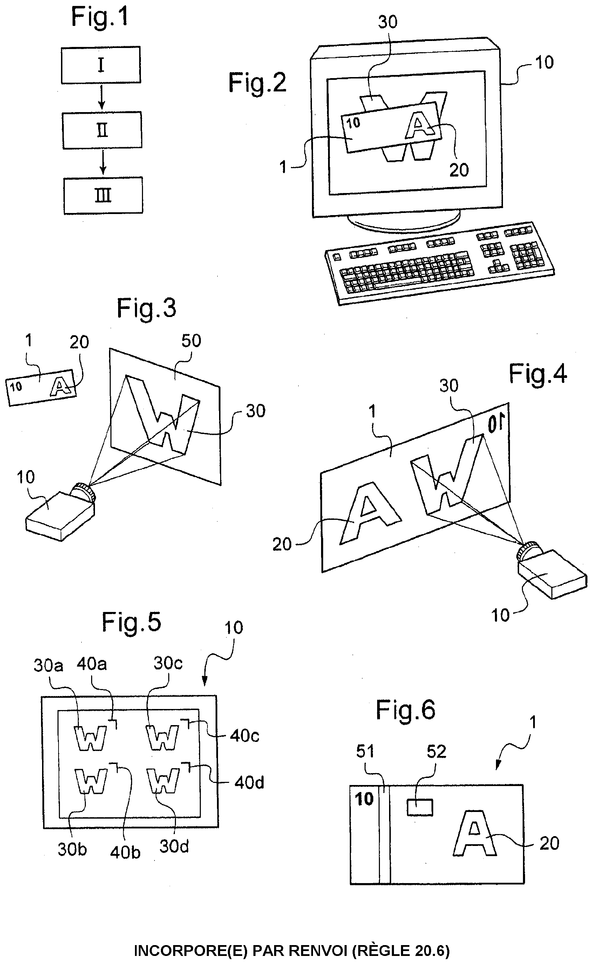

On a représenté sur la figure 1 un schéma en blocs relatif à des étapes mises en oeuvre dans un exemple de procédé selon l'invention.

Dans une première étape I, on superpose au moins partiellement une première image de l'article de sécurité avec une deuxième image produite par un imageur électronique.

Dans une deuxième étape II, on génère un mouvement relatif entre les première et deuxième images.

Enfin, dans une troisième étape III, on observe l'information d'authentification et/ou d'identification de l'article de sécurité, qui apparaît lors du mouvement relatif entre les première et deuxième images.

Les trois étapes I, II et III peuvent être réalisées simultanément ou non.

On a représenté sur les figures 2 à 4 des exemples d'association entre un article de sécurité 1 et un imageur électronique 10 permettant de mettre en oeuvre un tel procédé.

Sur la figure 2, l'imageur électronique 10 est par exemple un écran d'ordinateur sur lequel est affichée une deuxième image 30.

L'article de sécurité 1 est par exemple sous la forme d'un billet de banque et comporte une première image 20.

L'article de sécurité 1 est placé sur l'écran de l'imageur électronique 10 de manière à superposer au moins partiellement la première image 20 à la deuxième image 30, puis l'article de sécurité 1 est déplacé relativement à l'écran de l'imageur électronique 10 pour observer une information d'authentification et/ou d'identification de l'article de sécurité 1, conformément aux étapes décrites à la figure 1.

En variante, l'article de sécurité 1 en référence reste immobile par rapport à l'écran de l'imageur électronique 10 et la deuxième image 30 est animée d'un mouvement sur l'écran, par exemple une translation, par exemple à l'aide d'un programme activé ou non par l'utilisateur.

Sur la figure 3, l'imageur électronique 10 est par exemple sous la forme d'un projecteur numérique, projetant une deuxième image 30 sur un fond 50, par exemple le mur d'une pièce.

L'article de sécurité 1 comportant la première image 20 peut alors être superposé au moins partiellement à la deuxième image 30 projetée sur le fond 50 de manière à mettre en oeuvre les étapes décrites en référence à la figure 1.

Sur la figure 4, l'imageur électronique 10 est un projecteur qui projette la deuxième image 30 directement sur l'article de sécurité 1.

La deuxième image 30 peut, comme dans l'exemple de la figure 4, être projetée, par exemple sous forme de « W », sur une zone de l'article de sécurité 1 où n'est pas présente la première image 20. Puis, l'article de sécurité 1 peut par exemple être plié sur lui-même de manière à superposer la première image 20, par exemple sous forme de « A », à la deuxième image 30 projetée par l'imageur électronique 10, pour mettre en oeuvre les étapes décrites à la figure 1. La partie de l'article de sécurité 1 comportant la première image 20 peut en particulier être rabattue sur la partie comportant la deuxième image 30, cette partie restant immobile, de manière à ce que la deuxième image 30 se situe entre l'imageur 10 et la première image 20.

Dans une variante, non représentée, la deuxième image 30 est projetée directement sur la première image 20 de l'article 1. En particulier, la projection de la deuxième image 30 sur la première image 20 de l'article de sécurité 1 peut alors permettre une superposition au moins partielle des première et deuxième images. Puis, l'imageur électronique 10 est par exemple déplacé relativement à l'article de manière à mettre en oeuvre les étapes II et III décrites en référence à la figure 1.

On a représenté à la figure 5 une variante de réalisation dans laquelle l'imageur électronique 10 est un écran affichant plusieurs deuxièmes images 30a, 30b, 30c et 30d.

Les deuxièmes images 30a à 30d peuvent avoir des propriétés différentes, par exemple des formes, des couleurs, des dimensions, des points ou lignes de trame différentes.

Avantageusement, les deuxièmes images 30a à 30d se différencient de manière à permettre à l'une d'entre elles au moins d'être associée à au moins une première image 20 présente sur un article de sécurité 1. De la sorte, il est par exemple possible d'authentifier et/ou identifier une plus grande diversité d'articles de sécurité 1 ayant des premières images respectives différentes, correspondant aux différentes deuxièmes images 30a à 30d.

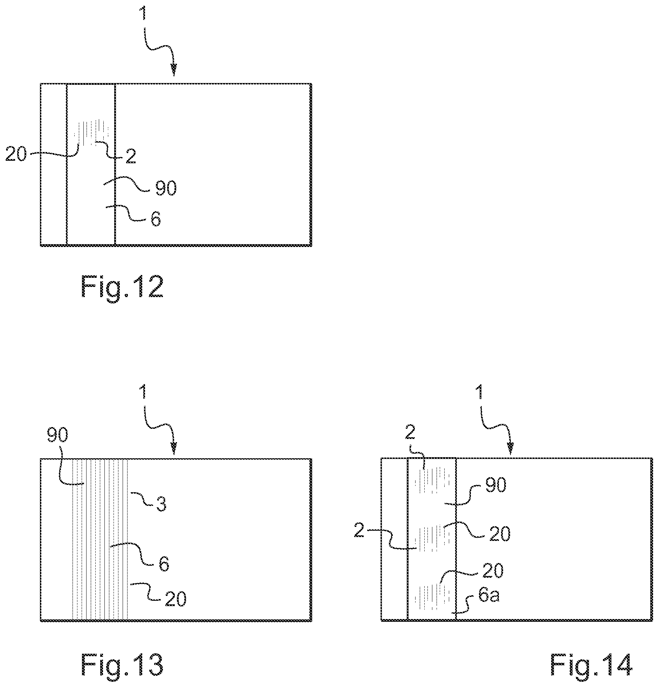

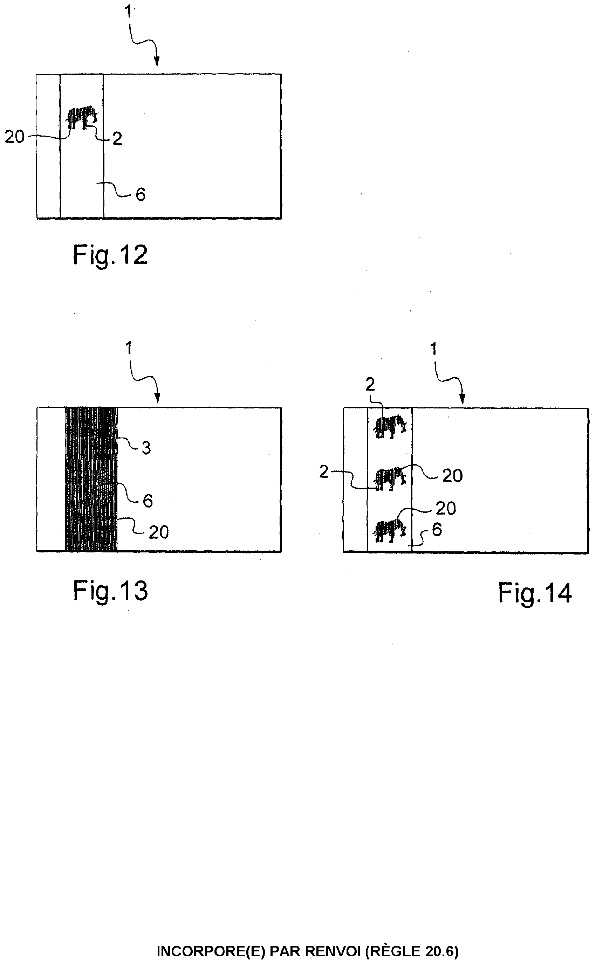

En variante, l'article de sécurité 1 comporte plusieurs premières images 20 différentes, comme on peut le voir par exemple sur la figure 14, et l'imageur électronique 10 produit une ou plusieurs deuxièmes images 30. De la sorte, il est par exemple possible d'authentifier et/ou d'identifier un article de sécurité 1 donné sur une plus grande diversité d'imageurs électroniques différents, et notamment avec des imageurs électroniques ayant des résolutions différentes. De la sorte, les deux avantages précédemment décrits peuvent être réunis.

L'imageur électronique 10 peut afficher un ou plusieurs indicateurs 40a, 40b, 40c et 40d permettant de renseigner l'utilisateur sur la manière de positionner l'article de sécurité 1 par rapport à l'imageur.

En particulier, les indicateurs 40a à 40d peuvent permettre de savoir où positionner le coin supérieur droit de l'article de sécurité 1, de manière à superposer correctement une première image 20 d'un article de sécurité 1 à une deuxième image 40a, 40b, 40c ou 40d affichée sur l'écran de l'imageur électronique 10.

On a illustré à la figure 6 la possibilité pour l'article de sécurité 1 de comporter un élément de sécurité additionnel 51 de tout type connu, par exemple l'un de ceux décrits précédemment, par exemple un fil de sécurité luminescent.

En outre, l'article de sécurité 1 peut comporter un microcircuit intégré 52, par exemple une puce RFID ou optique, permettant de communiquer avec l'imageur électronique 10 afin de commander l'affichage d'un indicateur tel que décrit précédemment ou de diffuser une information sur la manière de positionner les première et deuxième images.

Notamment dans les exemples décrits précédemment, la première image 20 peut comporter une trame de révélation 3 et la deuxième image 30 peut comporter une image combinée 2 comportant au moins deux images imbriquées 2a, l'image combinée 2 étant associée à la trame de révélation 3, ou inversement, comme mentionné plus haut.

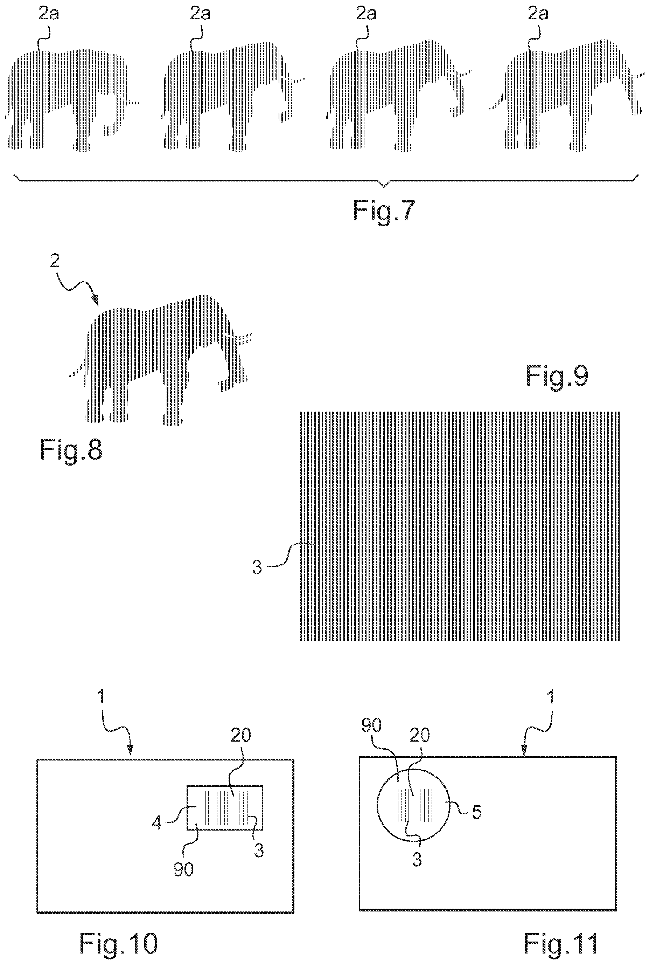

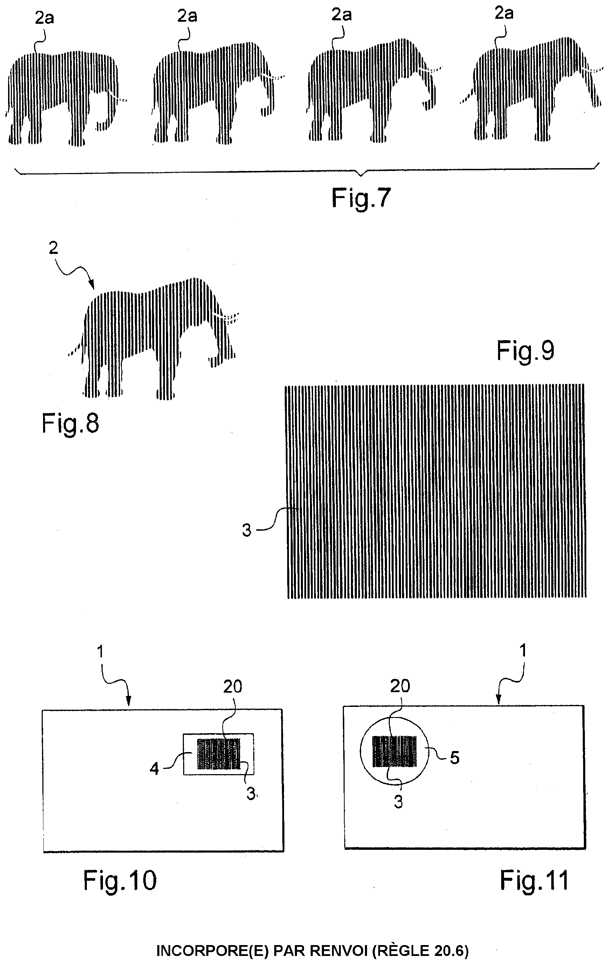

Les figures 7 à 26 suivantes illustrent cette possibilité.

On a représenté sur la figure 7 une série d'images imbriquées 2a permettant de créer une image combinée 2, visible sur la figure 8, représentant dans cet exemple un motif sous la forme d'un éléphant.

Les images imbriquées 2a correspondent par exemple à quatre positions différentes de l'éléphant et permettent ainsi de créer une décomposition du mouvement de l'éléphant.

Chaque image imbriquée 2a peut comporter comme illustré un ensemble de lignes parallèles, espacées entre elles de manière régulière ou non, et présentant des épaisseurs variables.

Les images 2a sont superposées les unes sur les autres de manière à former un motif combiné qui correspond à l'image combinée 2.

On a représenté sur la figure 9 un exemple de trame de révélation 3 pouvant être associée à l'image combinée 2 de la figure 8.

La trame de révélation 3 est par exemple de forme rectangulaire et comporte un ensemble de lignes parallèles, espacées entre elles de façon régulière ou non, et ayant des épaisseurs variables.

La trame de révélation 3 présente une aire, une longueur et une largeur, supérieures à celles de l'image combinée 2 permettant ainsi de visualiser plus facilement la totalité des mouvements de l'éléphant lors du déplacement relatif entre l'image combinée 2 et la trame de révélation 3.

Dans cet exemple, l'image combinée 2 et la trame de révélation 3 comportent des ensembles de lignes alternativement sombres et claires, notamment noires et blanches, mais il pourrait en être autrement. Par exemple, les lignes peuvent être colorées et être différentes pour l'image combinée 2 et pour la trame de révélation 3.

On a représenté sur les figures 10 à 14 des exemples de réalisation d'article de sécurité 1 pour la mise en oeuvre du procédé selon l'invention.

Sur la figure 10, l'article 1 comporte une fenêtre 4, de préférence au moins partiellement transparente, dans laquelle figure la première image 20 sous forme de trame de révélation 3. La première image 20 peut par exemple être formées par impression, notamment taille douce, métallisation ou démétallisation.

Sur la figure 11, l'article de sécurité 1 comporte un patch 5 sur lequel figure la première image 20 sous forme de trame de révélation 3, le patch 5 comportant par exemple des impressions holographiques.

Le patch 5 peut être au moins partiellement transparent.

La trame de révélation 3 peut comporter des impressions holographiques et/ou des métallisations et/ou démétallisations.

Sur la figure 12, l'article de sécurité 1 comporte un fil de sécurité 6 sur lequel figure la première image 20 sous forme d'image combinée 2.

Le fil de sécurité 6 peut également être au moins partiellement transparent ou comporter une zone partiellement transparente au niveau de l'image combinée 2.

Sur la figure 13, l'article de sécurité 1 comporte un fil de sécurité 6 sur lequel figure la première image 20 sous forme de trame de révélation 3.

Le fil de sécurité 6 peut être au moins partiellement transparent ou présenter une zone au moins partiellement transparente. La trame de révélation 3 peut s'étendre d'un bord de l'article de sécurité 1 au bord opposé.

Sur la figure 14, l'article de sécurité 1 comporte un fil de sécurité 6 comportant plusieurs premières images 20 sous forme d'images combinées 2. Les premières images 20 sont réalisées de manière à ce que l'article de sécurité 1 puisse être utilisé avec des imageurs électroniques différents, présentant notamment des résolutions différentes, chaque première image 20 étant adaptée à une résolution donnée d'un imageur électronique.

Le fil de sécurité 6 peut être au moins partiellement transparent ou comporter au moins une zone au moins partiellement transparente, notamment au niveau d'une image combinée 2.

La présence de plusieurs premières images 20 sur l'article de sécurité 1 disposées sur un fil de sécurité 6 peut permettre de simplifier le procédé de fabrication de l'article de sécurité 1 par incorporation du fil de sécurité 6 dans un substrat, notamment fibreux. Une incorporation au repère peut en particulier ne pas être nécessaire.

Dans tous les exemples précédemment décrits, les images combinées 2 et les trames de révélation 3 peuvent être interverties.

Les zones au moins partiellement transparentes peuvent être situées au niveau des images combinées 2 ou des trames de révélation 3, ou au niveau des deux à la fois.

Le fil de sécurité 6 peut être introduit dans l'article de sécurité 1 de façon conventionnelle, par exemple en surface, en masse ou en fenêtre(s).

Les images combinées 2 et/ou les trames de révélation 3 peuvent en outre comporter un filtre polarisant. L'article de sécurité 1 peut alors être authentifié et/ou identifié au moyen d'un imageur électronique 10 émettant une lumière polarisée.

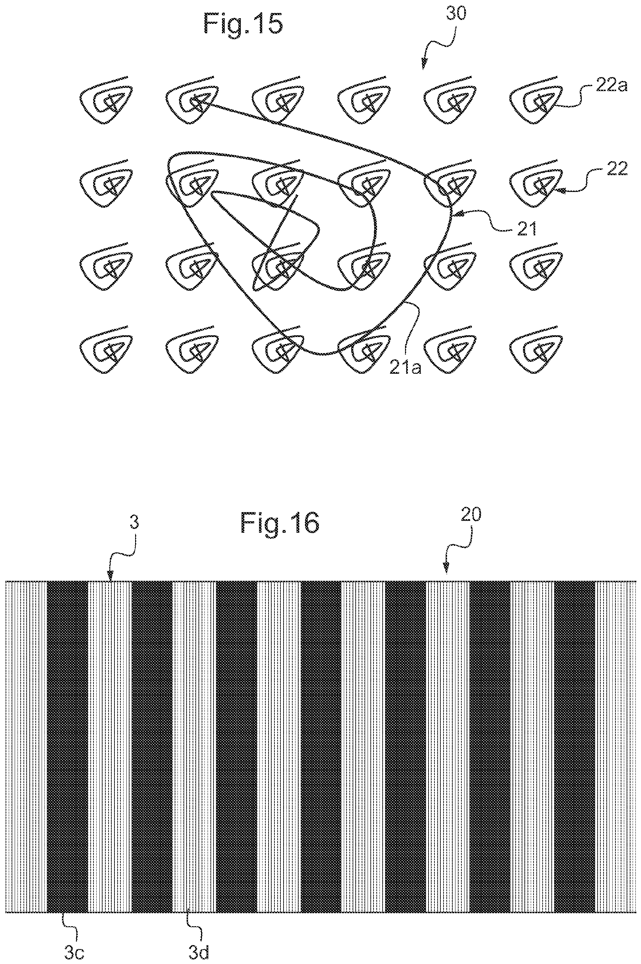

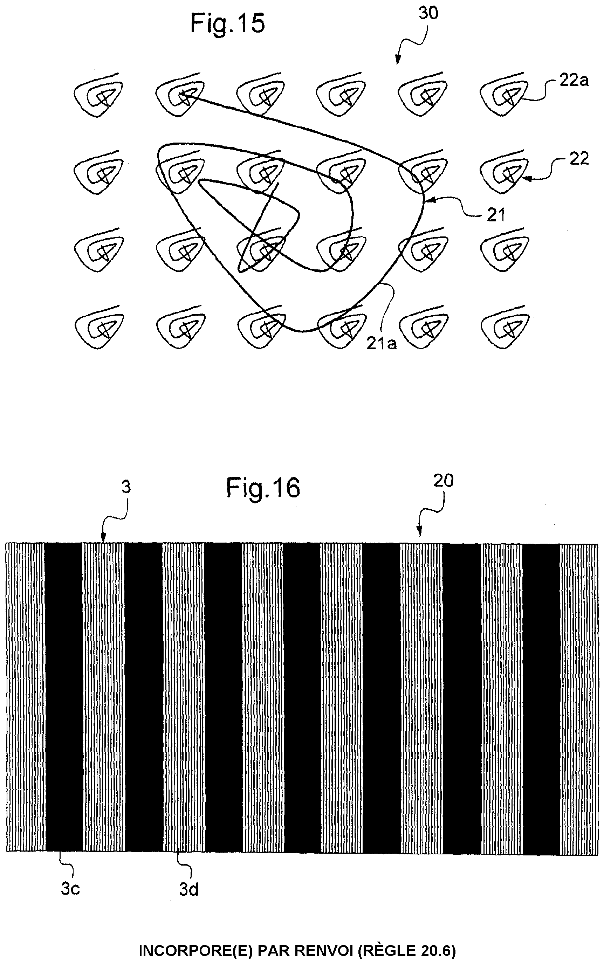

Sur la figure 15 est représentée de façon schématique une deuxième image 30 (ou une première image) comportant deux images combinées différentes 21 et 22. La seconde image combinée 22 est par exemple une image symétrique de la première image combinée 21 après modification éventuelle de sa taille, afin d'obtenir un réseau d'images combinées 22 organisé en rangées et colonnes.

La figure 16 représente la première image 20 (respectivement la deuxième image) correspondante, sous forme de trame de révélation 3 des images imbriquées 21a et 22a représentées schématiquement sur la figure 16. Cette trame de révélation 3 comporte l'association de deux trames élémentaires 3c et 3d permettant d'observer respectivement les images imbriquées 21a et 22a. La trame 3c comporte par exemple une succession de bandes noires alternant avec des bandes de la trame 3d constituées par une alternance de lignes blanches et noires, avec un pas plus faible.

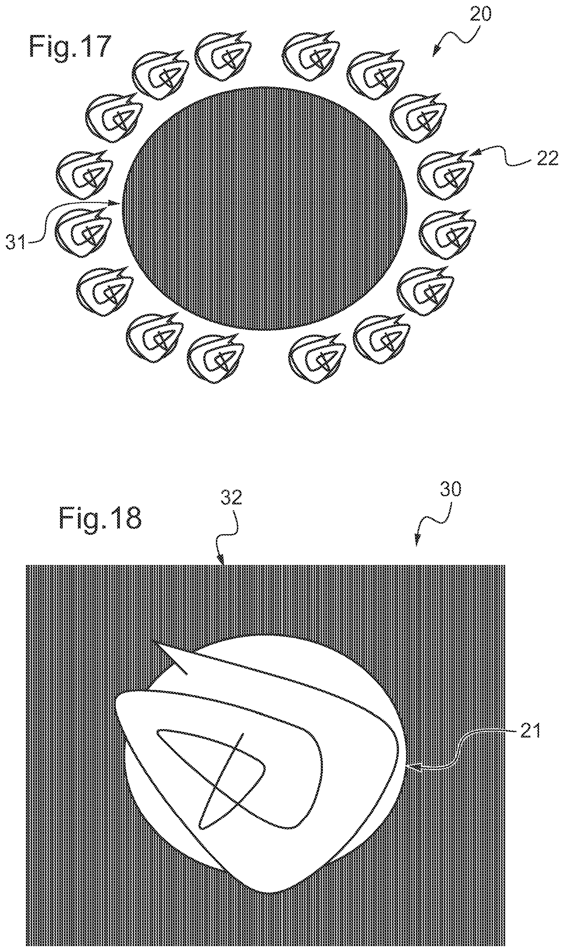

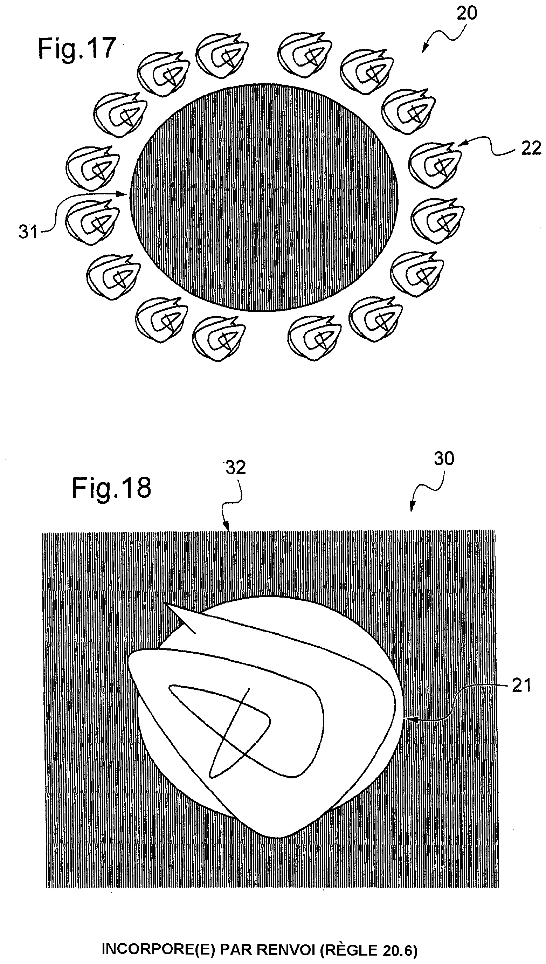

Sur la figure 17 est représentée de façon schématique une première image 20 (ou deuxième image) sous forme d'image combinée 22 disposée selon un réseau d'images combinées 22 autour d'une trame de révélation 31.

Sur la figure 18 est représentée de façon schématique la deuxième image 30 (respectivement la première image) sous forme d'image combinée 21 entourée d'une trame de révélation 32.

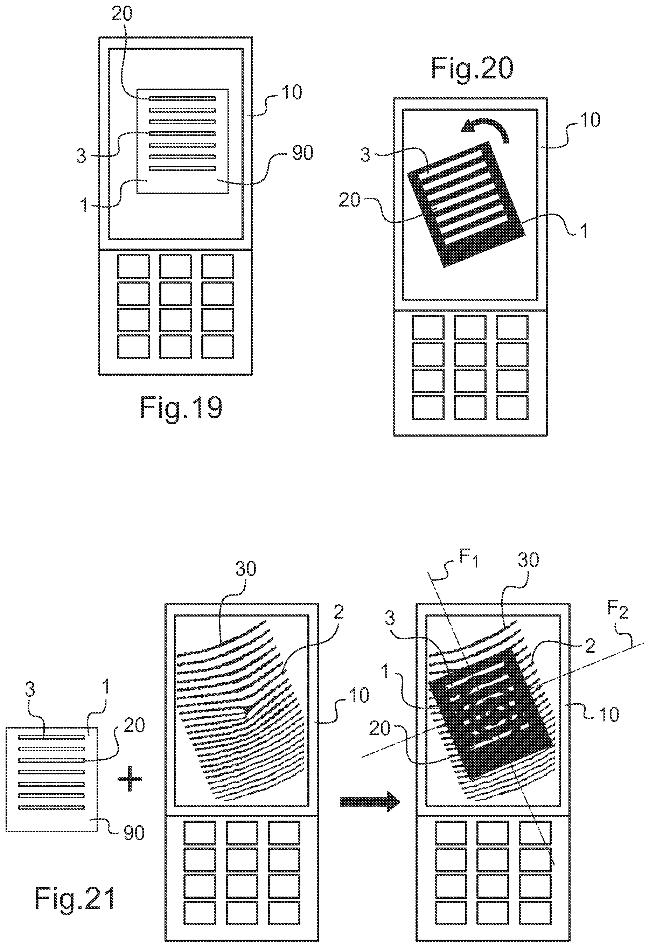

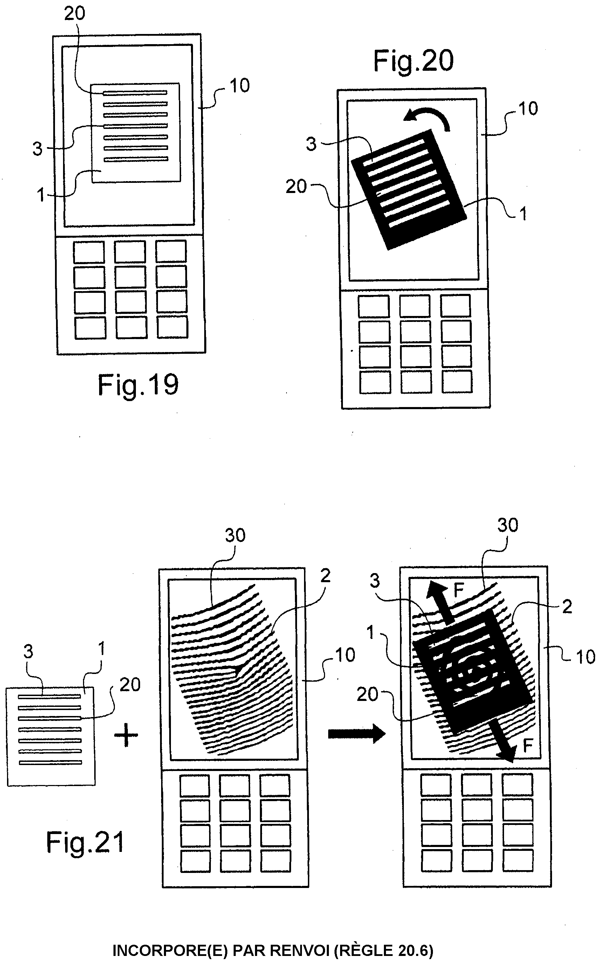

On a illustré sur les figures 19 à 21 un exemple de mise en oeuvre d'un procédé selon l'invention.

Dans cet exemple, l'imageur électronique 10 se présente par exemple sous la forme d'un téléphone portable sur lequel est affichée une deuxième image 30 sous forme d'image combinée 2 (visible sur la figure 21).

En outre, l'article de sécurité 1 comporte un filtre polarisant sur lequel a été formée la première image 20 sous forme de trame de révélation 3.

La figure 20 illustre la superposition de l'article de sécurité 1 comportant la première image 20 sous forme de trame de révélation 3 à la deuxième image 30 sous forme d'image combinée 2 produite par l'imageur électronique 10, celui-ci émettant une lumière polarisée.

L'utilisateur déplace l'article de sécurité 1 afin de l'amener dans une orientation croisée permettant d'observer l'opacité du filtre polarisant vis-à-vis de la lumière polarisée.

Puis, comme on peut le voir sur la figure 21, l'article de sécurité 1 comportant la trame de révélation 3 est déplacée par un mouvement de translation selon les flèches F par rapport à l'image combinée 2 affichée par l'écran de l'imageur électronique 10, de façon à faire apparaître l'animation des images imbriquées. Le déplacement a lieu en conservant l'orientation relative de la trame par rapport à l'écran.

Un tel procédé permet d'authentifier et/ou d'identifier l'article de sécurité 1 selon plusieurs niveaux de sécurité.

Le positionnement de la trame de révélation 3 comportant le filtre polarisant selon l'orientation permettant d'observer l'opacité du filtre polarisant, cette observation n'étant visible que sur un écran émettant une lumière polarisée, par exemple un écran du type LCD, procure un premier niveau de sécurité.

La révélation de l'animation des images imbriquées par déplacement de la trame de révélation 3 relativement à l'image combinée 2 procure un deuxième niveau de sécurité.

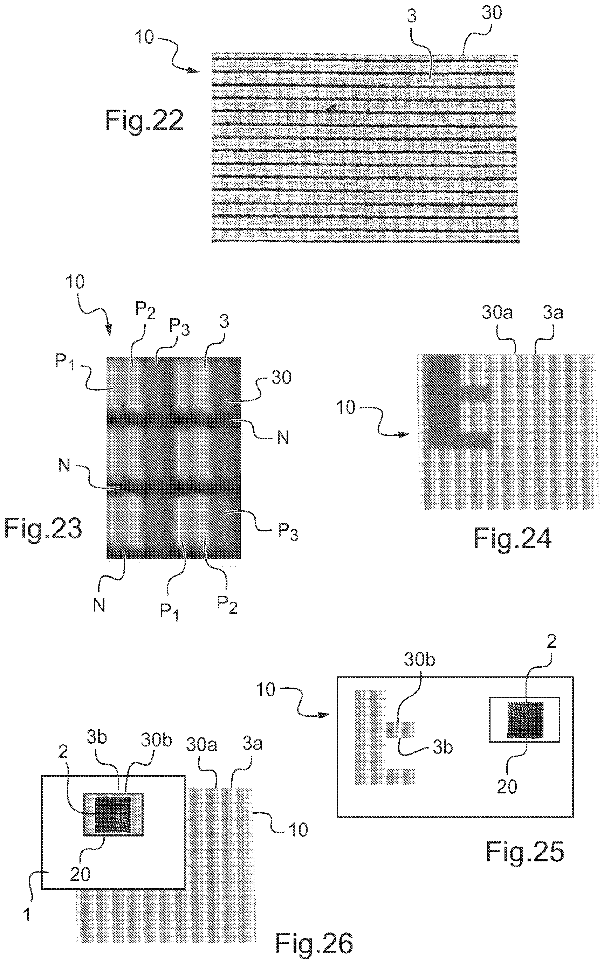

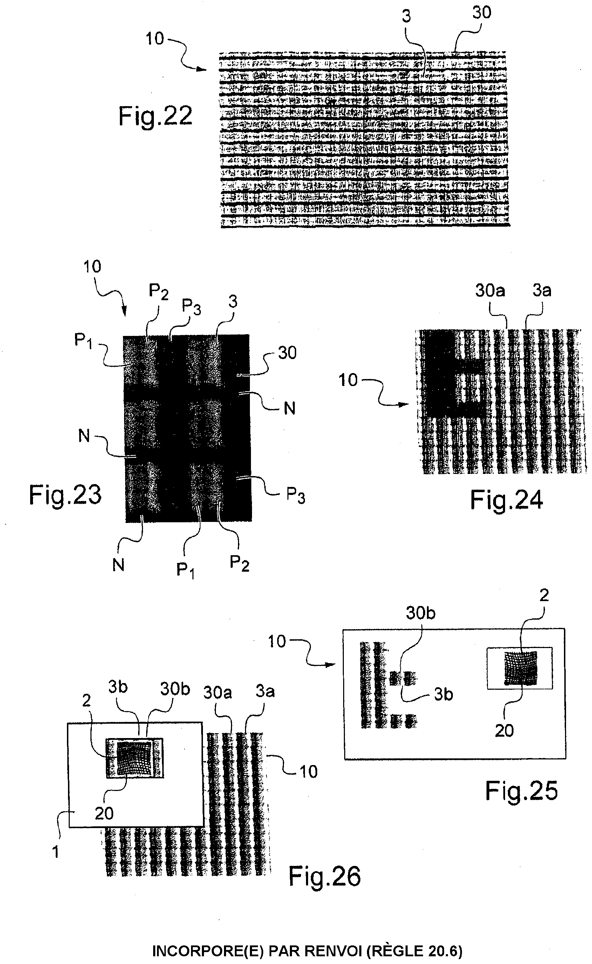

On a représenté sur les figures 22 et 23 un autre exemple de mise en oeuvre du procédé selon l'invention.

Dans cet exemple, l'imageur électronique 10 est de préférence un écran, notamment du type LCD, comportant une pluralité de pixels.

La figure 22 représente partiellement l'imageur électronique 10 sous forme d'écran LCD comportant une pluralité de pixels, et la figure 23 représente une partie de la figure 22 agrandie.

L'ensemble des pixels de l'écran forme la deuxième image 30 sous forme de trame de révélation 3.

Comme on peut le voir sur la figure 23, l'écran peut comporter un arrangement régulier de pixels disposés sous forme de lignes horizontales et verticales. En particulier, les lignes horizontales peuvent comporter une répétition de trois pixels P₁, P₂, et P₃, de couleurs différentes, par exemple RVB.

En outre, comme on peut le voir sur la figure 23, les lignes horizontales de pixels peuvent être séparées par des zones N de couleur noire dépourvues de pixels.

De cette façon, lorsque l'image combinée 2 de l'article de sécurité 1 est superposée à l'écran de l'imageur électronique 10 comportant la trame de révélation 3, un mouvement relatif dans le sens horizontal peut faire apparaître une animation multichrome permettant d'observer des images imbriquées, et après avoir appliqué une rotation de 90° à l'image combinée 2, un mouvement relatif dans le sens vertical peut permettre de faire apparaître une animation monochrome permettant d'observer lesdites images imbriquées.

Selon une variante, l'image combinée 2 et la trame de révélation 3 sont réalisées de manière à permettre l'observation d'une animation par un mouvement relatif dans deux directions différentes, notamment perpendiculaires. Un tel effet est par exemple obtenu au moyen d'une trame de révélation 3 constituée de rangées et de colonnes de points, par exemple de forme carrée, et d'une image combinée 2 adaptée, comme celle représentée sur la figure 25.

L'imageur électronique 10 peut correspondre à l'écran d'un téléphone portable, ayant par exemple une résolution de 160 dpi, permettant ainsi d'obtenir une trame de révélation dont les pixels sont espacés d'environ 159 µm.

L'image combinée 2 présente sur l'article de sécurité 1 peut figurer dans une fenêtre traversante de l'article de sécurité 1, scellée par une bande plastique transparente. La bande plastique transparente peut présenter des propriétés de filtre polarisant circulaire.

L'article de sécurité 1 comportant la bande plastique transparente polarisante sur laquelle est formée l'image combinée 2 peut être fabriqué de sorte que les propriétés de polarisation soient conservées sur les zones constitutives de l'image combinée, représentant par exemple plusieurs positions successives d'une spirale. Pour ce faire, on peut réaliser l'image combinée 2 comme décrit précédemment, par exemple en imprimant la bande plastique avec une encre spécifique apportant une propriété de polarisation ou par chauffage, par exemple avec un laser, des zones devant être dépourvues de propriétés polarisantes.

On a représenté sur les figures 24 à 26 un autre exemple de mise en oeuvre du procédé selon l'invention.

Dans cet exemple, l'imageur électronique 10 sous forme d'écran comporte une première partie 30a de la deuxième image sous forme de trame de révélation 3a, comme on peut le voir sur la figure 24.

L'article de sécurité 1 comporte l'autre partie 30b de la deuxième image sous forme de trame de révélation 3b, par exemple dans une fenêtre au moins partiellement transparente de l'article. De plus, l'article de sécurité 1 comporte la première image 20 sous forme d'image combinée 2, par exemple dans une fenêtre au moins partiellement transparente de l'article, comme on peut le voir sur la figure 25.

Lorsque l'article de sécurité 1 est plié sur lui-même de façon à superposer l'image combinée 2 à la partie 3b de la trame de révélation, puis superposé à l'imageur électronique 10 de façon à superposer l'image combinée 2 et la partie 3b de la trame de révélation à la partie 3a de la trame de révélation formée sur l'écran de l'imageur électronique 10, il est possible de mettre en oeuvre le procédé selon l'invention par mouvement relatif de la partie de l'article de sécurité 1 comportant l'image combinée 2 par rapport à la partie de l'article de sécurité 1 comportant la partie 3b de la trame de révélation, celle-ci étant immobile relativement à l'écran comportant la partie 3a de la trame de révélation pour permettre la reconstitution de la trame de révélation et l'observation des images imbriquées, comme on peut le voir sur la figure 26. L'image combinée 2 permet avantageusement l'observation d'une animation ou de deux animations par un mouvement relatif respectivement dans deux directions différentes, notamment perpendiculaires.

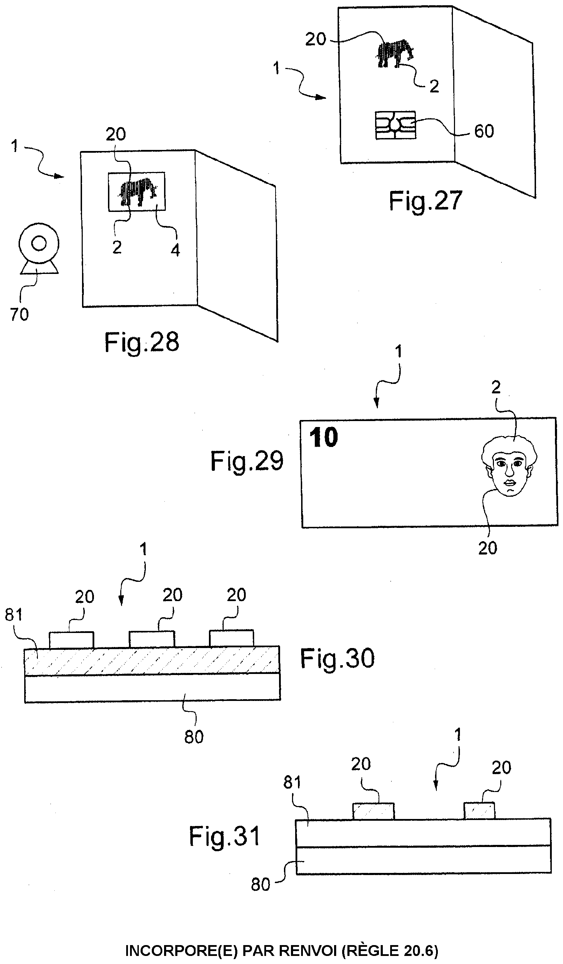

On a représenté sur la figure 27 un exemple d'article de sécurité 1 sous la forme d'un passeport comportant une première image 20, imprimée sous la forme d'une image combinée 2, et une puce RFID 60.

La puce 60 est apte à communiquer avec l'imageur électronique 10 (non représenté) pour permettre de produire la deuxième image 30 associée à la première image 20.

En particulier, lors du procédé d'authentification et/ou d'identification du passeport 1, on illumine la première image 20 avec l'imageur électronique. La puce 60 comporte une information transmise à l'imageur électronique qui projette alors la deuxième image en fonction de cette information.

On a représenté sur la figure 28 un autre exemple de mise en oeuvre du procédé selon l'invention.

Dans cet exemple, l'article de sécurité 1, sous forme de passeport, comporte une première image 20 sous forme d'image combinée 2 obtenue par métallisation d'un film plastique transparent inséré dans le passeport selon une fenêtre 4.

Le passeport 1, notamment l'image combinée 2, est photographié et/ou filmé par une caméra numérique 70 appartenant ou reliée à l'imageur électronique. Un programme de reconnaissance peut alors permettre de reconnaître l'image combinée 2 et d'acquérir depuis une base de données une deuxième image associée à la première image. La base de données est par exemple stockée sur un serveur sécurisé. La deuxième image ainsi obtenue est affichée et/ou projetée par l'imageur électronique pour permettre d'authentifier et/ou d'identifier le passeport 1 par mouvement relatif des première et deuxième images.

On a représenté sur la figure 29 un article de sécurité 1 sous forme d'un billet de banque.

L'article de sécurité 1 comporte une première image 20 imprimée, représentant par exemple le visage d'une personne, cette première image 20 comportant une image combinée 2, par exemple au niveau des cheveux de la personne. De préférence, l'image combinée 2 figure dans une zone transparente, translucide ou d'opacité réduite de l'article de sécurité 1.

Pour authentifier et/ou identifier le billet de banque 1, il est par exemple possible de photographier le billet, notamment la première image 20, et de produire une deuxième image associée à la première image, cette deuxième image étant obtenue à partir de la photographie du billet.

Par exemple, l'imageur électronique est un téléphone portable capable de photographier le billet de banque, et un programme interne au téléphone portable permet de télécharger une deuxième image associée à la première image qui peut être ensuite affichée sur l'écran du téléphone portable pour mettre en oeuvre le procédé selon l'invention.

Selon une variante, ledit programme interne au téléphone portable permet de générer ladite deuxième image associée à ladite première image.

On a représenté sur les figures 30 et 31, en coupe, deux exemples d'article de sécurité comportant des zones luminescentes.

Sur la figure 30, l'article de sécurité 1 comporte un substrat 80 sur lequel est imprimée une couche 81 opaque noire. La couche 81 opaque noire recouvre par exemple entièrement le substrat 80.

De plus, une première image 20 luminescente, notamment fluorescente et/ou phosphorescente, par exemple sous forme d'image combinée, est imprimée sur la couche 81 opaque noire.

L'imageur électronique associé, non représenté, est apte à projeter une deuxième image 30, non représentée, sur la première image 20 sous un éclairage ultraviolet (UV).

De la sorte, la première image 20 n'est pas observable sous éclairage normal du fait de la présence de la couche 81 opaque noire. En revanche, sous éclairage UV, la première image 20 est observable et il est possible de lui superposer au moins partiellement la deuxième image 30, notamment sous forme de trame de révélation, pour mettre en oeuvre le procédé selon l'invention.

Sur la figure 31, la première image 20 est imprimée avec une encre opaque noire sur une couche 81 luminescente, notamment fluorescente et/ou phosphorescente, elle-même imprimée sur le substrat 80.

Dans cet exemple, la première image 20 est à la fois visible sous éclairage normal et sous éclairage UV.

L'expression « comportant un » est synonyme de « comportant au moins un ».

## Revendications

1. Procédé d'authentification et/ou d'identification d'un article de sécurité (1) comportant une première image (20), comportant les étapes consistant à :
- superposer au moins partiellement la première image (20) de l'article (1) avec une deuxième image (30) produite par un imageur électronique (10), l'article de sécurité (1) comportant notamment un microcircuit intégré (60) apte à communiquer avec l'imageur électronique (10) pour que celui-ci produise ladite deuxième image (30), l'imageur électronique (10) comportant notamment un écran dont les pixels servent au moins partiellement à former la deuxième image (30) sous la forme d'une trame de révélation (3),
- effectuer un mouvement relatif entre les première et deuxième images (20, 30) afin de permettre d'observer une information d'authentification et/ou d'identification de l'article de sécurité (1) lors du mouvement relatif entre les première et deuxième images (20, 30), l'information d'authentification et/ou d'identification étant non accessible autrement que lors du mouvement relatif des première et deuxième images, un effet de mouvement ou d'animation d'images imbriquées (2a) étant observé lors du mouvement relatif entre les première (20) et deuxième (30) images.

2. Procédé selon la revendication 1, la première image (20) comportant une trame de révélation (3) et la deuxième image (30) comportant une image combinée (2) comportant au moins deux images imbriquées (2a), l'image combinée (2) étant associée à la trame de révélation (3), ou inversement.

3. Procédé selon la revendication 1 ou 2, la première image (20) et la deuxième image (30) présentant des propriétés de polarisation, la deuxième image (30) étant notamment produite par l'imageur électronique (10) au moyen d'une lumière polarisée, et la première image (20) comportant notamment un filtre polarisant ou étant définie par un premier matériau polarisant superposé à un deuxième matériau polarisant, le premier matériau étant de préférence une impression de cristaux liquides cholestériques et le deuxième matériau étant de préférence un substrat linéairement polarisant.

4. Procédé selon l'une quelconque des revendications précédentes, l'article de sécurité (1) comportant une zone au moins partiellement transparente, translucide ou d'opacité réduite comportant la première image (20), notamment une fenêtre (4) au moins partiellement transparente.

5. Procédé selon l'une quelconque des revendications précédentes, le mouvement relatif de la première image (20) par rapport à la deuxième image (30) étant un mouvement de translation et/ou de rotation, étant notamment un mouvement relatif entre les première (20) et deuxième (30) images généré par un déplacement de l'imageur et/ou de l'article ou par une modification de l'image produite par l'imageur électronique.

6. Procédé selon la revendication 5, dans lequel, avant d'observer l'information d'authentification et/ou d'identification lors du mouvement relatif entre les première et deuxième images (20, 30), on positionne les première et deuxième images (20, 30) selon une orientation de l'une par l'autre permettant à l'une de masquer partiellement l'autre.

7. Procédé selon l'une quelconque des revendications précédentes, l'article de sécurité (1) comportant plusieurs premières images (20) différentes et/ou l'imageur électronique (10) produisant plusieurs deuxièmes images (30a, 30b, 30c, 30d) différentes.

8. Procédé d'authentification et/ou d'identification d'un article de sécurité (1) comportant une première image (20), comportant les étapes consistant à :
- superposer au moins partiellement la première image (20) de l'article (1) avec une deuxième image (30) produite par un imageur électronique (10),
- effectuer un mouvement relatif entre les première et deuxième images (20, 30) afin de permettre d'observer une information d'authentification et/ou d'identification de l'article de sécurité (1) lors du mouvement relatif entre les première et deuxième images (20, 30), l'information d'authentification et/ou d'identification étant non accessible autrement que lors du mouvement relatif des première et deuxième images,
la première image (20) comportant une trame de révélation (3) et la deuxième image (30) comportant une image combinée (2) comportant au moins deux images imbriquées (2a), l'image combinée (2) étant associée à la trame de révélation (3), ou inversement, un effet d'animation d'images imbriquées (2a) étant observé lors du mouvement relatif entre les première (20) et deuxième (30) images.

9. Procédé d'authentification et/ou d'identification d'un article de sécurité (1) comportant une première image (20), comportant les étapes consistant à :
- superposer au moins partiellement la première image (20) de l'article (1) avec une deuxième image (30) produite par un imageur électronique (10),
- effectuer un mouvement relatif entre les première et deuxième images (20, 30) afin de permettre d'observer une information d'authentification et/ou d'identification de l'article de sécurité (1) lors du mouvement relatif entre les première et deuxième images (20, 30),
la première image (20) étant définie par un premier matériau polarisant superposé à un deuxième matériau polarisant, le premier matériau étant de préférence une impression de cristaux liquides cholestériques et le deuxième matériau étant de préférence un substrat linéairement polarisant,
un effet d'animation d'images imbriquées (2a) étant observé lors du mouvement relatif entre les première (20) et deuxième (30) images.

10. Procédé d'authentification et/ou d'identification d'un article de sécurité (1) comportant une première image (20), comportant les étapes consistant à :
- superposer au moins partiellement la première image (20) de l'article (1) avec une deuxième image (30) produite par un imageur électronique (10),
- effectuer un mouvement relatif entre les première et deuxième images (20, 30) afin de permettre d'observer une information d'authentification et/ou d'identification de l'article de sécurité (1) lors du mouvement relatif entre les première et deuxième images (20, 30), l'information d'authentification et/ou d'identification étant non accessible autrement que lors du mouvement relatif des première et deuxième images, l'imageur électronique (10) comportant un écran dont les pixels servent au moins partiellement à former la deuxième image (30) sous la forme d'une trame de révélation (3), les lignes et/ou les points de trame de la trame de révélation (3) étant notamment formés par les pixels de l'écran de l'imageur électronique (10) ; la trame de révélation (3) étant notamment formée par une succession de lignes multichrome formées par des pixels de l'écran de l'imageur électronique (10), notamment des lignes comportant des pixels présentant trois cellules rouge, verte et bleue, les pixels étant espacés les uns des autres de manière à former des lignes monochromes dépourvues de pixels, notamment de couleur noire.

11. Procédé d'authentification et/ou d'identification d'un article de sécurité (1) comportant une première image (20), comportant les étapes consistant à :
- superposer au moins partiellement la première image (20) de l'article (1) avec une deuxième image (30) produite par un imageur électronique (10),
- effectuer un mouvement relatif entre les première et deuxième images (20, 30) afin de permettre d'observer une information d'authentification et/ou d'identification de l'article de sécurité (1) lors du mouvement relatif entre les première et deuxième images (20, 30),
l'imageur électronique (10) étant un projecteur.

12. Procédé d'authentification et/ou d'identification d'un article de sécurité (1) comportant une première image (20), comportant les étapes consistant à :
- superposer au moins partiellement la première image (20) de l'article (1) avec une deuxième image (30) produite par un imageur électronique (10),
- effectuer un mouvement relatif entre les première et deuxième images (20, 30) afin de permettre d'observer une information d'authentification et/ou d'identification de l'article de sécurité (1) lors du mouvement relatif entre les première et deuxième images (20, 30),
l'article de sécurité (1) comportant un microcircuit intégré (60) apte à communiquer avec l'imageur électronique (10) pour que celui-ci produise la deuxième image (30) associée à la première image (20).

13. Article de sécurité (1), qui est adapté pour être utilisé dans le procédé selon l'une quelconque des revendications précédentes, comportant une première image (20) superposable à au moins une deuxième image (30) produite par un imageur électronique (10), la première image (20) étant définie par un premier matériau polarisant, étant définie par un substrat polarisant rendu localement non polarisé de manière à former la première image (20) ou par une impression d'une encre polarisante ; le premier matériau polarisant étant notamment superposé à un deuxième matériau polarisant, le premier matériau étant de préférence une impression de cristaux liquides cholestériques et le deuxième matériau étant de préférence un substrat linéairement polarisant.

14. Article selon la revendication 13, comportant plusieurs premières images (20) différentes, chaque première image (20) étant superposable à au moins une deuxième image (30) produite par un imageur électronique (10) adapté à cette première image, les imageurs électroniques (10) ayant notamment des résolutions différentes.

15. Procédé de fabrication d'une première image d'un article selon la revendication 13, dans lequel :
- on dépose une couche métallique sur un substrat au moins partiellement transparent,
- on applique, notamment par impression, couchage ou dépôt, une encre ou un vernis sur la couche métallique, cette encre ou ce vernis pouvant être coloré(e) ou mat(e), de sorte à former la première image,
- on procède à une démétallisation sélective dans la ou les zones non recouvertes par l'encre ou le vernis.

## Patentansprüche

1. Verfahren zur Authentifizierung und/oder Identifizierung eines Sicherheitsartikels (1), der ein erstes Bild (20) umfasst, umfassend die Schritte, die aus Folgendem bestehen:
- Überlagern, mindestens teilweise, des ersten Bildes (20) des Artikels (1) mit einem zweiten Bild (30), das durch einen elektronischen Bildgeber (10) erzeugt wird, wobei der Sicherheitsartikel (1) insbesondere eine integrierte Mikroschaltung (60) umfasst, die dazu fähig ist, mit dem elektronischen Bildgeber (10) zu kommunizieren, damit dieser das zweite Bild (30) erzeugt, wobei der elektronische Bildgeber (10) insbesondere einen Bildschirm umfasst, dessen Pixel mindestens teilweise dazu dienen, das zweite Bild (30) in Form eines Enthüllungsrasters (3) zu bilden,
- Ausführen einer relativen Bewegung zwischen dem ersten und zweiten Bild (20, 30), um das Beobachten einer Information zur Authentifizierung und/oder Identifizierung des Sicherheitsartikels (1) während der relativen Bewegung zwischen dem ersten und zweiten Bild (20, 30) zu ermöglichen, wobei die Authentifizierungs- und/oder Identifizierungsinformation nur während der relativen Bewegung des ersten und zweiten Bildes zugänglich ist,
wobei während der relativen Bewegung zwischen dem ersten (20) und zweiten (30) Bild ein Bewegungs- oder Animationseffekt verschachtelter Bilder (2a) beobachtet wird.

2. Verfahren nach Anspruch 1, wobei das erste Bild (20) ein Enthüllungsraster (3) umfasst und das zweite Bild (30) ein kombiniertes Bild (2) umfasst, das mindestens zwei verschachtelte Bilder (2a) umfasst, wobei das kombinierte Bild (2) mit dem Enthüllungsraster (3) assoziiert ist, oder umgekehrt.

3. Verfahren nach Anspruch 1 oder 2, wobei das erste Bild (20) und das zweite Bild (30) Polarisationseigenschaften aufweisen, wobei das zweite Bild (30) durch den elektronischen Bildgeber (10) insbesondere mit Hilfe polarisierten Lichts erzeugt wird und das erste Bild (20) insbesondere einen Polarisationsfilter umfasst oder durch ein erstes polarisierendes Material, das ein zweites polarisierendes Material überlagert, definiert ist, wobei das erste Material vorzugsweise ein Druck cholesterischer Flüssigkristalle ist und das zweite Material vorzugsweise ein linear polarisierendes Substrat ist.

4. Verfahren nach einem der vorhergehenden Ansprüche, wobei der Sicherheitsartikel (1) einen mindestens teilweise transparenten, transluzenten oder mit verminderter Opazität ausgestatteten Bereich, der das erste Bild (20) umfasst, insbesondere ein mindestens teilweise transparentes Fenster (4), umfasst.

5. Verfahren nach einem der vorhergehenden Ansprüche, wobei die relative Bewegung des ersten Bildes (20) in Bezug auf das zweite Bild (30) eine Translations- und/oder Rotationsbewegung ist, insbesondere eine relative Bewegung zwischen dem ersten (20) und zweiten (30) Bild ist, die durch eine Verschiebung des Bildgebers und/oder des Artikels oder durch eine Modifizierung des Bildes, das durch den elektronischen Bildgeber erzeugt wird, generiert wird.

6. Verfahren nach Anspruch 5, wobei vor dem Beobachten der Authentifizierungs- und/oder Identifizierungsinformation während der relativen Bewegung zwischen dem ersten und zweiten Bild (20, 30) das erste und zweite Bild (20, 30) gemäß einer Orientierung des einen in Bezug auf das andere positioniert werden, welche es dem einem ermöglicht, das andere teilweise zu verdecken.

7. Verfahren nach einem der vorhergehenden Ansprüche, wobei der Sicherheitsartikel (1) mehrere unterschiedliche erste Bilder (20) umfasst und/oder der elektronische Bildgeber (10) mehrere unterschiedliche zweite Bilder (30a, 30b, 30c, 30d) erzeugt.

8. Verfahren zur Authentifizierung und/oder Identifizierung eines Sicherheitsartikels (1), der ein erstes Bild (20) umfasst, umfassend die Schritte, die aus Folgendem bestehen:
- Überlagern, mindestens teilweise, des ersten Bildes (20) des Artikels (1) mit einem zweiten Bild (30), das durch einen elektronischen Bildgeber (10) erzeugt wird,
- Ausführen einer relativen Bewegung zwischen dem ersten und zweiten Bild (20, 30), um das Beobachten einer Information zur Authentifizierung und/oder Identifizierung des Sicherheitsartikels (1) während der relativen Bewegung zwischen dem ersten und zweiten Bild (20, 30) zu ermöglichen, wobei die Authentifizierungs- und/oder Identifizierungsinformation nur während der relativen Bewegung des ersten und zweiten Bildes zugänglich ist,
wobei das erste Bild (20) ein Enthüllungsraster (3) umfasst und das zweite Bild (30) ein kombiniertes Bild (2) umfasst, das mindestens zwei verschachtelte Bilder (2a) umfasst, wobei das kombinierte Bild (2) mit dem Enthüllungsraster (3) assoziiert ist, oder umgekehrt, wobei während der relativen Bewegung zwischen dem ersten (20) und zweiten (30) Bild ein Animationseffekt verschachtelter Bilder (2a) beobachtet wird.

9. Verfahren zur Authentifizierung und/oder Identifizierung eines Sicherheitsartikels (1), der ein erstes Bild (20) umfasst, umfassend die Schritte, die aus Folgendem bestehen:
- Überlagern, mindestens teilweise, des ersten Bildes (20) des Artikels (1) mit einem zweiten Bild (30), das durch einen elektronischen Bildgeber (10) erzeugt wird,
- Ausführen einer relativen Bewegung zwischen dem ersten und zweiten Bild (20, 30), um das Beobachten einer Information zur Authentifizierung und/oder Identifizierung des Sicherheitsartikels (1) während der relativen Bewegung zwischen dem ersten und zweiten Bild (20, 30) zu ermöglichen,
wobei das erste Bild (20) durch ein erstes polarisierendes Material, das ein zweites polarisierendes Material überlagert, definiert ist, wobei das erste Material vorzugsweise ein Druck cholesterischer Flüssigkristalle ist und das zweite Material vorzugsweise ein linear polarisierendes Substrat ist,
wobei während der relativen Bewegung zwischen dem ersten (20) und zweiten (30) Bild ein Animationseffekt verschachtelter Bilder (2a) beobachtet wird.

10. Verfahren zur Authentifizierung und/oder Identifizierung eines Sicherheitsartikels (1), der ein erstes Bild (20) umfasst, umfassend die Schritte, die aus Folgendem bestehen:
- Überlagern, mindestens teilweise, des ersten Bildes (20) des Artikels (1) mit einem zweiten Bild (30), das durch einen elektronischen Bildgeber (10) erzeugt wird,
- Ausführen einer relativen Bewegung zwischen dem ersten und zweiten Bild (20, 30), um das Beobachten einer Information zur Authentifizierung und/oder Identifizierung des Sicherheitsartikels (1) während der relativen Bewegung zwischen dem ersten und zweiten Bild (20, 30) zu ermöglichen, wobei die Authentifizierungs- und/oder Identifizierungsinformation nur während der relativen Bewegung des ersten und zweiten Bildes zugänglich ist,
wobei der elektronische Bildgeber (10) einen Bildschirm umfasst, dessen Pixel mindestens teilweise dazu dienen, das zweite Bild (30) in Form eines Enthüllungsrasters (3) zu bilden, wobei die Rasterlinien und/oder -punkte des Enthüllungsrasters (3) insbesondere durch die Pixel des Bildschirms des elektronischen Bildgebers (10) gebildet werden; wobei das Enthüllungsraster (3) insbesondere durch eine multichrome Folge von Linien gebildet wird,
die durch Pixel des Bildschirms des elektronischen Bildgebers (10) gebildet werden, insbesondere Linien, die Pixel umfassen, die drei Zellen, rot, grün und blau, aufweisen, wobei die Pixel so voneinander beabstandet sind, dass sie monochrome Linien, die über keine Pixel verfügen, insbesondere schwarze Linien, bilden.

11. Verfahren zur Authentifizierung und/oder Identifizierung eines Sicherheitsartikels (1), der ein erstes Bild (20) umfasst, umfassend die Schritte, die aus Folgendem bestehen:
- Überlagern, mindestens teilweise, des ersten Bildes (20) des Artikels (1) mit einem zweiten Bild (30), das durch einen elektronischen Bildgeber (10) erzeugt wird,
- Ausführen einer relativen Bewegung zwischen dem ersten und zweiten Bild (20, 30), um das Beobachten einer Information zur Authentifizierung und/oder Identifizierung des Sicherheitsartikels (1) während der relativen Bewegung zwischen dem ersten und zweiten Bild (20, 30) zu ermöglichen,
wobei der elektronische Bildgeber (10) ein Projektor ist.

12. Verfahren zur Authentifizierung und/oder Identifizierung eines Sicherheitsartikels (1), der ein erstes Bild (20) umfasst, umfassend die Schritte, die aus Folgendem bestehen:
- Überlagern, mindestens teilweise, des ersten Bildes (20) des Artikels (1) mit einem zweiten Bild (30), das durch einen elektronischen Bildgeber (10) erzeugt wird,
- Ausführen einer relativen Bewegung zwischen dem ersten und zweiten Bild (20, 30), um das Beobachten einer Information zur Authentifizierung und/oder Identifizierung des Sicherheitsartikels (1) während der relativen Bewegung zwischen dem ersten und zweiten Bild (20, 30) zu ermöglichen,
wobei der Sicherheitsartikel (1) eine integrierte Mikroschaltung (60) umfasst, die dazu fähig ist, mit dem elektronischen Bildgeber (10) zu kommunizieren, damit dieser das zweite Bild (30), das mit dem ersten Bild (20) assoziiert ist, erzeugt.

13. Sicherheitsartikel (1), der dazu angepasst ist, in dem Verfahren nach einem der vorhergehenden Ansprüche verwendet zu werden, umfassend ein erstes Bild (20), das mindestens ein zweites Bild (30), das durch einen elektronischen Bildgeber (10) erzeugt wird, überlagern kann, wobei das erste Bild (20) durch ein erstes polarisierendes Material definiert ist, durch ein polarisierendes Substrat, das lokal nicht polarisiert gemacht ist, um das erste Bild zu bilden (20), oder durch einen Druck einer polarisierenden Tinte definiert ist; wobei das erste polarisierende Material insbesondere ein zweites polarisierendes Material überlagert, wobei das erste Material vorzugsweise ein Druck cholesterischer Flüssigkristalle ist und das zweite Material vorzugsweise ein linear polarisierendes Substrat ist.

14. Artikel nach Anspruch 13, der mehrere unterschiedliche erste Bilder (20) umfasst, wobei jedes erste Bild (20) mindestens ein zweites Bild (30), das durch einen elektronischen Bildgeber (10), der für dieses erste Bild angepasst ist, erzeugt wird, überlagern kann, wobei die elektronischen Bildgeber (10) insbesondere unterschiedliche Auflösungen aufweisen.

15. Verfahren zur Herstellung eines ersten Bildes eines Artikels nach Anspruch 13, wobei:
- eine Metallschicht auf ein mindestens teilweise transparentes Substrat abgeschieden wird,
- insbesondere durch Drucken, Streichen oder Abscheiden eine Tinte oder ein Lack auf die Metallschicht aufgebracht wird, wobei diese Tinte oder dieser Lack farbig oder matt sein kann, um das erste Bild zu bilden,
- eine selektive Entmetallisierung in dem oder den Bereichen vorgenommen wird, die nicht durch die Tinte oder den Lack bedeckt sind.

## Claims

1. Method for authenticating and/or identifying a security article (1) comprising a first image (20), comprising the steps consisting in:
- at least partially superimposing the first image (20) of the article (1) with a second image (30) produced by an electronic imager (10), the security article (1) comprising in particular an integrated microcircuit (60) able to communicate with the electronic imager (10) so that the latter produces said second image (30), the electronic imager (10) comprising in particular a screen the pixels of which are used at least in part to form the second image (30) in the form of a revelation raster (3),
- performing a relative movement between the first and second images (20, 30) in order to make it possible to observe authentication and/or identification information of the security article (1) during the relative movement between the first and second images (20, 30), the authentication and/or identification information being inaccessible other than during the relative movement of the first and second images,
a movement or animation effect of interleaved images (2a) being observed during the relative movement between the first (20) and second (30) images.

2. Method according to Claim 1, the first image (20) comprising a revelation raster (3) and the second image (30) comprising a combined image (2) comprising at least two interleaved images (2a), the combined image (2) being associated with the revelation raster (3), or vice versa.

3. Method according to Claim 1 or 2, the first image (20) and the second image (30) exhibiting polarization properties, the second image (30) being in particular produced by the electronic imager (10) by means of a polarized light, and the first image (20) comprising in particular a polarizing filter or being defined by a first polarizing material superimposed on a second polarizing material, the first material preferably being a printing of cholesteric liquid crystals and the second material preferably being a linearly polarizing substrate.

4. Method according to any one of the preceding claims, the security article (1) comprising an area which is at least partially transparent, translucent or has reduced opacity and which comprises the first image (20), in particular an at least partially transparent window (4).

5. Method according to any one of the preceding claims, the relative movement of the first image (20) in relation to the second image (30) being a translation and/or rotation movement, being in particular a relative movement between the first (20) and second (30) images which is generated by a displacement of the imager and/or of the article or by a modification of the image produced by the electronic imager.

6. Method according to Claim 5, wherein, before the authentication and/or identification information is observed during the relative movement between the first and second images (20, 30), the first and second images (20, 30) are positioned in an orientation with respect to one another which allows one to partially conceal the other.

7. Method according to any one of the preceding claims, the security article (1) comprising a plurality of different first images (20) and/or the electronic imager (10) producing a plurality of different second images (30a, 30b, 30c, 30d).

8. Method for authenticating and/or identifying a security article (1) comprising a first image (20), comprising the steps consisting in:
- at least partially superimposing the first image (20) of the article (1) with a second image (30) produced by an electronic imager (10),
- performing a relative movement between the first and second images (20, 30) in order to make it possible to observe authentication and/or identification information of the security article (1) during the relative movement between the first and second images (20, 30), the authentication and/or identification information being inaccessible other than during the relative movement of the first and second images,
the first image (20) comprising a revelation raster (3) and the second image (30) comprising a combined image (2) comprising at least two interleaved images (2a), the combined image (2) being associated with the revelation raster (3), or vice versa, an animation effect of interleaved images (2a) being observed during the relative movement between the first (20) and second (30) images.

9. Method for authenticating and/or identifying a security article (1) comprising a first image (20), comprising the steps consisting in:
- at least partially superimposing the first image (20) of the article (1) with a second image (30) produced by an electronic imager (10),
- performing a relative movement between the first and second images (20, 30) in order to make it possible to observe authentication and/or identification information of the security article (1) during the relative movement between the first and second images (20, 30),
the first image (20) being defined by a first polarizing material superimposed on a second polarizing material, the first material preferably being a printing of cholesteric liquid crystals and the second material preferably being a linearly polarizing substrate,
an animation effect of interleaved images (2a) being observed during the relative movement between the first (20) and second (30) images.

10. Method for authenticating and/or identifying a security article (1) comprising a first image (20), comprising the steps consisting in:
- at least partially superimposing the first image (20) of the article (1) with a second image (30) produced by an electronic imager (10),
- performing a relative movement between the first and second images (20, 30) in order to make it possible to observe authentication and/or identification information of the security article (1) during the relative movement between the first and second images (20, 30), the authentication and/or identification information being inaccessible other than during the relative movement of the first and second images,
the electronic imager (10) comprising a screen the pixels of which are used at least in part to form the second image (30) in the form of a revelation raster (3), the lines and/or the raster dots of the revelation raster (3) being in particular formed by the pixels of the screen of the electronic imager (10); the revelation raster (3) being in particular formed by a succession of multichrome lines formed by pixels of the screen of the electronic imager (10), in particular lines comprising pixels having three cells, red, green and blue, the pixels being spaced apart from one another so as to form monochrome lines devoid of pixels, in particular black in colour.

11. Method for authenticating and/or identifying a security article (1) comprising a first image (20), comprising the steps consisting in:
- at least partially superimposing the first image (20) of the article (1) with a second image (30) produced by an electronic imager (10),
- performing a relative movement between the first and second images (20, 30) in order to make it possible to observe authentication and/or identification information of the security article (1) during the relative movement between the first and second images (20, 30),
the electronic imager (10) being a projector.

12. Method for authenticating and/or identifying a security article (1) comprising a first image (20), comprising the steps consisting in:
- at least partially superimposing the first image (20) of the article (1) with a second image (30) produced by an electronic imager (10),
- performing a relative movement between the first and second images (20, 30) in order to make it possible to observe authentication and/or identification information of the security article (1) during the relative movement between the first and second images (20, 30),
the security article (1) comprising an integrated microcircuit (60) able to communicate with the electronic imager (10) so that the latter produces the second image (30) associated with the first image (20).

13. Security article (1), which is designed to be used in the method according to any one of the preceding claims, comprising a first image (20) which is able to be superimposed on at least one second image (30) produced by an electronic imager (10), the first image (20) being defined by a first polarizing material, being defined by a polarizing substrate rendered locally non-polarized so as to form the first image (20) or by a printing of a polarizing ink; the first polarizing material being in particular superimposed on a second polarizing material, the first material preferably being a printing of cholesteric liquid crystals and the second material preferably being a linearly polarizing substrate.

14. Article according to Claim 13, comprising a plurality of different first images (20), each first image (20) being able to be superimposed on at least one second image (30) produced by an electronic imager (10) suited to this first image, the electronic imagers (10) having in particular different resolutions.

15. Method for fabricating a first image of an article according to Claim 13, wherein:
- a metal layer is deposited on an at least partially transparent substrate,
- an ink or a varnish is applied, in particular by printing, coating or deposition, on the metal layer, this ink or this varnish possibly being coloured or matt, so as to form the first image,
- selective demetallization is undertaken in the area or areas not covered by the ink or the varnish.
